# EUROPÄISCHE PATENTANMELDUNG

(11) **EP 4 560 420 A1**
(43) Veröffentlichungstag der Anmeldung: **28.05.2025**
(21) Anmeldenummer: 24211112.8
(22) Anmeldetag: 06.11.2024
(51) Int. Cl.: G05B 19/418, B29C 45/76

(54) **VERFAHREN UND VORRICHTUNG ZUR ÜBERWACHUNG EINES ZYKLISCHEN HERSTELLPROZESSES**

(30) Priorität: 24.11.2023 EP 23212020
(71) Anmelder: Kistler Holding AG, 8408 Winterthur (CH)
(72) Erfinder: Schatte, Gerrit, 8400 Winterthur (CH); Weber, Stefan, 8408 Winterthur (CH); Schirmer, Mathias, 8280 Kreuzlingen (CH); Stadelmann, Thilo, 8400 Winterthur (CH); Rosenthal, Matthias, 8400 Winterthur (CH); Schwizer, Simone, 8400 Winterthur (CH); Wildmann, Damian, 8400 Winterthur (CH); Yan, Peng, 8400 Winterthur (CH); Abdulkadir, Ahmed, 8400 Winterthur (CH); Vaculik, Robert, 78465 Konstanz (DE); Aguzzi, Giulia, 8049 Zürich (CH)

(57) **Zusammenfassung**

Die Erfindung betrifft ein Verfahren zur Überwachung eines zyklischen Herstellprozesses mit mehreren Zyklen, wo in jedem Zyklus mindestens ein Stückgut hergestellt wird; wobei in einem ersten Verfahrensschritt für mindestens einen Zyklus mindestens eine zeitliche Folge von Sensordaten des Herstellprozesses automatisch bereitgestellt wird, welche Sensordaten in einer Wirkungsbeziehung mit einer Stabilität und einer Anomalie des Herstellprozesses stehen; wobei in einem zweiten Verfahrensschritt für den Zyklus die Stabilität des Herstellprozesses ermittelt wird, bei Stabilität des Herstellprozesses werden die Sensordaten als stabile Sensordaten markiert; wobei in einem dritten Verfahrensschritt die stabilen Sensordaten automatisch dimensional zu Punktdaten reduziert werden; und wobei in einem vierten Verfahrensschritt automatisch eine Dichteverteilung der Punktdaten gebildet wird, welche Dichteverteilung mindestens einen Stabilitätsbereich der Punktdaten und mindestens einen Anomaliebereich der Punktdaten aufweist, und welche Punktdaten im Anomaliebereich einer Anomalie des Herstellprozesses entsprechen.

## Beschreibung

### Technisches Gebiet

Die Erfindung betrifft ein Verfahren und eine Borrichtung zur Überwachung eines zyklischen Herstellprozesses nach den Oberbegriffen der unabhängigen Ansprüche.

### Stand der Technik

Ein zyklischer Herstellprozess zeichnet sich durch wiederholende Aktivitäten bei der Herstellung von Stückgütern aus. Die Aktivitäten werden in Zyklen vollständig abgearbeitet und danach wiederholt. Durch immergleiche Wiederholung der Aktivitäten lässt sich eine grosse Anzahl identischer Stückgüter herstellen, was die Herstellkosten tief hält. Beispiele für einen zyklischen Herstellprozess sind Verfahren zum Urformen wie Giessen, Spritzgiessen, Sintern, usw. Nachfolgend wird die Erfindung anhand eines Spritzgiessprozesses beschrieben, was die Verwendung der Erfindung in anderen Verfahren zum Urformen nicht ausschliesst.

Bei einem Spritzgiessprozess werden mit einer Spritzgiessmaschine Stückgüter hergestellt. Dazu weist jede Spritzgiessmaschine ein Spritzgiesswerkzeug mit mindestens einer Kavität auf. In die Kavität des Spritzgiesswerkzeuges wird ein Werkstoff unter Druck eingespritzt. Der eingespritzte Werkstoff plastifiziert und nimmt die Form der Kavität an. Der eingespritzte Werkstoff kühlt aus und bildet ein Stückgut. Der Spitzgiessprozess wird überwacht. Dabei ist ein Werkzeuginnendruck in der Kavität des Spritzgiesswerkzeuges ein wichtiger Parameter für die Qualität des Stückgutes. Stückgüter sind Gutteile, wenn sie bei einer Qualitätsprüfung mindestens ein Qualitätsmerkmal erfüllen. Andernfalls sind die Stückgüter Schlechtteile. Anomalien beim Spritzgiessprozess, wie ein zu hoher oder zu tiefer Werkzeuginnendruck können zu Schlechtteilen führen, was wiederum die Herstellkosten erhöht und zu vermeiden ist.

Die Schrift WO2022/258239A1 offenbart hierzu ein Verfahren zur Ermittlung von Anomalien bei einem zyklischen Herstellprozess wie bei einem Spritzgiessprozess. Für jeden Zyklus wird eine zeitliche Folge von Druckwerten des Werkzeuginnendruckes auf mindestens einen Kennwert reduziert, welcher Kennwert für mehrere Zyklen in einem Entscheidungsbaum automatisch partitioniert wird. Unter der Annahme, dass sich Gutteile von Natur aus sehr ähnlich sind, während sich Schlechtteile stärker voneinander unterscheiden, lassen sich Gutteile im Entscheidungsbaum nicht so rasch partitionieren wie Schlechtteile. Der Entscheidungsbaum von Gutteilen weist daher eine vergleichsweise grössere Tiefe auf. Zur Ermittlung von Anomalien beim Spritzgiessprozess wird dann für einen aktuellen Zyklus die Tiefe des Entscheidungsbaumes für einen aktuellen Kennwert mit der durchschnittlichen Tiefe des Entscheidungsbaumes für den gleichen Kennwert aus früheren Zyklen verglichen. Bei einer geringeren Tiefe weist er aktuelle Zyklus eine Anomalie beim Spritzgiessprozess auf.

Die vorliegenden Erfindung stellt sich die Aufgabe, das aus der Schrift WO2022/258239A1 bekannte Verfahren für die Überwachung eines zyklischen Herstellprozesses zu vereinfachen und zu verbessern. Auch soll eine Vorrichtung zur Anwendung des vereinfachten und verbesserten Verfahrens bereitgestellt werden.

### Darstellung der Erfindung

Diese Aufgabe wird durch die Merkmale der unabhängigen Ansprüche gelöst.

Die Erfindung betrifft ein Verfahren zur Überwachung eines zyklischen Herstellprozesses mit mehreren Zyklen, wo in jedem Zyklus mindestens ein Stückgut hergestellt wird; wobei in einem ersten Verfahrensschritt für mindestens einen Zyklus mindestens eine zeitliche Folge von Sensordaten des Herstellprozesses automatisch bereitgestellt wird, welche Sensordaten in einer Wirkungsbeziehung mit einer Stabilität und einer Anomalie des Herstellprozesses stehen; wobei in einem zweiten Verfahrensschritt für den Zyklus die Stabilität des Herstellprozesses ermittelt wird, bei Stabilität des Herstellprozesses werden die Sensordaten als stabile Sensordaten markiert; wobei in einem dritten Verfahrensschritt die stabilen Sensordaten automatisch dimensional zu Punktdaten reduziert werden; und wobei in einem vierten Verfahrensschritt automatisch eine Dichteverteilung der Punktdaten gebildet wird, welche Dichteverteilung mindestens einen Stabilitätsbereich der Punktdaten und mindestens einen Anomaliebereich der Punktdaten aufweist, und welche Punktdaten im Anomaliebereich einer Anomalie des Herstellprozesses entsprechen.

Die Erfindung betrifft auch eine Vorrichtung zur Ausführung eines Verfahrens zur Überwachung eines zyklischen Herstellprozesses mit mehreren Zyklen, welche Vorrichtung in jedem Zyklus mindestens ein Stückgut herstellt; welche Vorrichtung mindestens eine Sensoreinheit aufweist, welche Sensoreinheit zur Ausführung eines ersten Verfahrensschrittes für mindestens einen Zyklus mindestens eine zeitliche Folge von Sensordaten erzeugt und automatisch bereitstellt, welche Sensordaten in einer Wirkungsbeziehung mit einer Stabilität und einer Anomalie des Herstellprozesses stehen; welche Vorrichtung mindestens eine Auswerteeinheit aufweist, in welcher Auswerteeinheit ein Computerproramm geladen ist, welches geladene Computerprogramm die Auswerteeinheit veranlasst, die Sensordaten automatisch zu laden; wobei das geladene Computerprogramm zur Ausführung des zweiten Verfahrensschrittes die Auswerteeinheit veranlasst, bei ermittelter Stabilität des Herstellprozesses die Sensordaten als stabile Sensordaten zu markieren; wobei das geladene Computerprogramm zur Ausführung eines dritten Verfahrensschrittes die Auswerteeinheit veranlasst, die stabilen Sensordaten automatisch dimensional zu Punktdaten zu reduzieren; und wobei das geladene Computerprogramm zur Ausführung eines vierten Verfahrensschrittes die Auswerteeinheit veranlasst, mit den Punktdaten automatisch eine Dichteverteilung zu bilden, welche Dichteverteilung mindestens einen Stabilitätsbereich der Punktdaten und mindestens einen Anomaliebereich der Punktdaten aufweist, und welche Punktdaten im Anomaliebereich einer Anomalie des Herstellprozesses entsprechen.

Im Unterschied zur Lehre der Schrift WO2022/258239A1 wählt die vorliegende Erfindung also einen anderen Ansatz, anstatt über die Tiefe von Entscheidungsbäumen von Kennwerten auf Anomalien des Herstellprozesses zu schliessen, werden bei ermittelter Stabilität des Herstellprozesses die Sensordaten des Herstellprozesses als stabile Sensordaten markiert und dimensional zu Punktdaten reduziert, welche Punktdaten sich dann in einer Dichteverteilung in einen Stabilitätsbereich und in einen Anomaliebereich aufteilen. Die Dichteverteilung ist eine aus der mathematischen Statistik bekannte Häufigkeitsverteilung. Die Dichteverteilung gibt an, wie dicht die Punktdaten um einen Mittelwert der Punktdaten verteilt sind. Punktdaten, welche sich in der Nähe des Mittelwertes befinden, liegen im Stabilitätsbereich. Hingegen liegen Punktdaten, welche vom Mittelwert entfernt sind, im Anomaliebereich. Der Vorteil der Erfindung liegt darin, dass sobald ein Stabilitätsbereich und ein Anomaliebereich der Punktdaten gebildet ist, sich in einem weiteren Zyklus weitere Sensordaten ohne Ermittlung der Stabilität des Herstellprozesses und ohne Markierung als stabile Sensordaten zu Punktdaten reduzieren lassen und sich einzig aus ihrer Lage im Stabilitätsbereich oder Anomaliebereich, bestimmen lässt, ob bei der Herstellung des weiteren Stückgutes eine Anomalie aufgetreten ist. Die dimensionale Reduktion von Sensordaten erfolgt ohne grossen Rechenaufwand automatisch einfach und schnell. Auch die Bildung der Dichteverteilung benötigt keinen grossen Rechenaufwand und geschieht ebenfalls automatisch einfach und schnell. Somit lässt sich das Verfahren in bestehende zyklische Herstellprozesse kostengünstig integrieren und liefert in Echtzeit eine Vorhersage der Qualität des hergestellten Stückgutes, ohne dass in einem eigenständigen Verfahrensschritt kontrolliert werden muss, ob das Stückgut ein Qualitätsmerkmal erfüllt oder nicht, was Aufwand und Kosten spart.

Weitere Ausbildungen des Erfindungsgegenstandes werden in den abhängigen Ansprüchen beansprucht.

### Kurze Beschreibung der Zeichnungen

Im Folgenden wird die Erfindung beispielhaft unter Beizug der Figuren näher erklärt. Es zeigt
- Fig. 1: schematisch einen Teil einer Spritzgiessmaschine 1 zur Überwachung eines zyklischen Herstellprozesses;
- Fig. 2: drei Werkzeuginnendruckkurven Y1, Y2, Y3 eines mit der Spritzgiessmaschine 1 gemäss Fig. 1 durchgeführten zyklischen Herstellprozesses;
- Fig. 3: ein Flussdiagramm mit mehreren Verfahrensschritten M1 bis M7 des Verfahrens M zur Überwachung eines zyklischen Herstellprozesses unter Verwendung der Spritzgiessmaschine 1 gemäss Fig. 1;
- Fig. 4: eine Darstellung einer Dimensionsreduktion und der Ermittlung eines Stabilitätsbereiches SA und eines Anomaliebereiches AA der Verfahrensschritte M3 und M4 des Verfahrens M gemäss Fig. 3;
- Fig. 5.: ein Flussdiagramm mit mehreren Verfahrensschritten M8 bis M13 des Verfahrens M zur Überwachung eines zyklischen Herstellprozesses unter Verwendung der Spritzgiessmaschine 1 gemäss Fig. 1;
- Fig. 6: eine Darstellung der Ermittlung einer Wirkungsbeziehung R zwischen Maschineneinstelldaten MPD und Prozessparameterdaten PPD im Verfahrensschritt M9 des Verfahrens M gemäss Fig. 5;
- Fig. 7: eine Darstellung der Ermittlung von stabilen Maschineneinstelldaten SMPD und anomalen Maschineneinstelldaten AMPD im Verfahrensschritt M11 des Verfahrens M gemäss Fig. 5;
- Fig. 8: eine Darstellung der Ordnung von Residuen RE nach Grösse SZ und Vorzeichen SI im Verfahrensschritt M13 des Verfahrens M gemäss Fig. 5; und
- Fig. 9: ein Flussdiagramm mit mehreren Verfahrensschritten M14 bis M19 des Verfahrens M zur Überwachung eines zyklischen Herstellprozesses unter Verwendung der Spritzgiessmaschine 1 gemäss Fig. 1.

Gleiche Bezugszeichen bezeichnen in den Figuren gleiche Gegenstände.

### Wege zur Ausführung der Erfindung

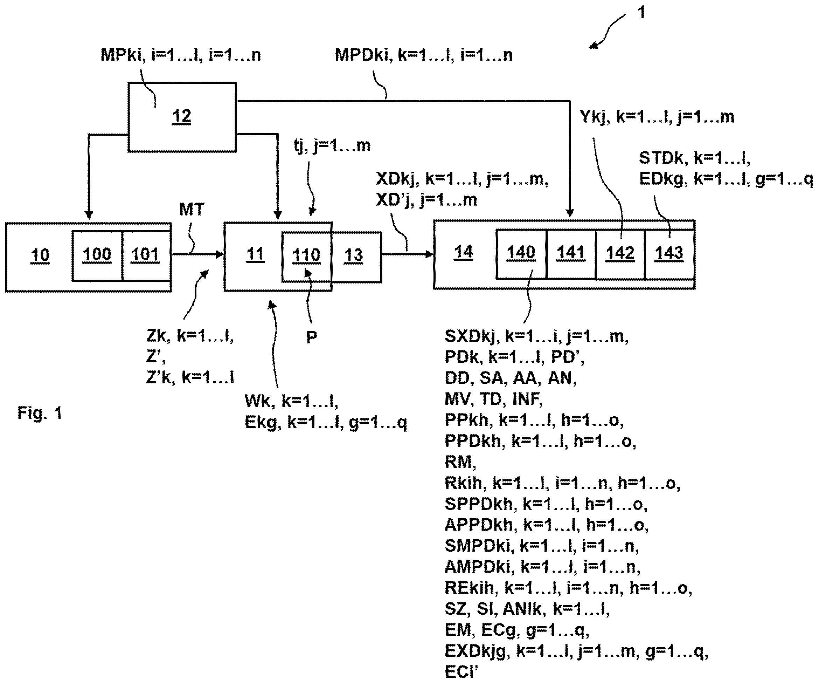

Fig. 1 zeigt schematisch einen Teil einer handelsüblichen und dem Fachmann bekannten Spritzgiessmaschine 1 zur Überwachung eines Spritzgiessprozesses. Der Spritzgiessprozess ist ein Beispiel für einen zyklischen Herstellprozess. Der Herstellprozess zeichnet sich durch wiederholte Aktivitäten in mehreren Zyklen Z aus. In jedem Zyklus Z wird ein Stückgut W hergestellt. Der Zyklus Z und das Stückgut W werden auch mit einem Zyklus-Index k als Zk, k=l...l und Wk, k=1...l dargestellt. Der Zyklen-Index k bezeichnet die einzelnen Zyklen Z und die Zyklen-Zahl l bezeichnet die Anzahl der Zyklen Z. Für einen für einen Spritzgiessprozess typische Zyklusdauer von 10 sec werden in 24 h Dauerbetrieb der Spritzgiessmaschine 1 6240 Stückgüter W hergestellt.

Jeder Zyklus Zk, k=l...l weist Phasen I bis III auf. Die erste Phase I heisst auch Einspritzphase I. Die zweite Phase II heisst auch Nachdruckphase II. Die dritte Phase III heisst auch Restkühlphase III.

Die Spritzgiessmaschine 1 weist als Bestandteil mindestens eine Einspritzvorrichtung 10 mit einer Schnecke 100 und einer Düse 101 auf. Mit der Schnecke 100 wird ein Werkstoff zu einer Schmelze MT verflüssigt und gegen die Düse 101 bewegt. Die Schmelze MT kann aus Kunststoff, Metall, Keramik usw. sein.

Weiter weist die Spritzgiessmaschine 1 als Bestandteil mindestens ein Spritzgiesswerkzeug 11 mit mindestens einer Kavität 110 auf. In der Einspritzphase I wird die Schmelze MT durch die Düse 101 unter Druck in die Kavität 110 eingespritzt. In der Nachdruckphase II wird die in das Spritzgiesswerkzeug 11 eingespritzte Schmelze MT in der Kavität 110 zum Erstarren gebracht. In der Restkühlphase III kühlt die weitgehend erstarrte Schmelze MT in der Kavität 110 ab. Am Ende des Herstellprozesses wird ein fertiges Stückgut Wk, k=l...l aus der Kavität 110 ausgestossen.

Die Spritzgiessmaschine 1 weist als Bestandteil mindestens eine Steuereinheit 12 auf. Die Steuereinheit 12 steuert den Spritzgiessprozess über mindestens eine Maschineneinstellgrösse MP. Die Maschineneinstellgrösse MP wird auch mit dem Zyklus-Index k und einem Maschineneinstellgrösse-Index i als MPki, k=1...l, i=1...n dargestellt. Der Maschineneinstellgrösse-Index i bezeichnet die einzelnen Maschineneinstellgrössen MPki, k=1...l, i=1...n und die Maschineneinstellgrösse-Zahl n bezeichnet die Anzahl der Maschineneinstellgrössen MPki, k=1...l, i=1...n. Konkret ist die Maschineneinstellgrösse MPki, k=1...l, i=1...n:
- Eine erste Maschineneinstellgrösse MPki, k=1...l, i=1 ist eine Dosiergeschwindigkeit der Schnecke 100.
- Eine zweite Maschineneinstellgrösse MPki, k=l...l, i=2 ist eine Einspritzgeschwindigkeit der Schmelze MT in die Kavität 110.
- Eine dritte Maschineneinstellgrösse MPki, k=l...l, i=3 ist ein Umschaltzeitpunkt tII von der Einspritzphase I auf die Nachdruckphase II.
- Eine vierte Maschineneinstellgrösse MPki, k=l...l, i=4 ist eine Entlastungsbewegung der Schnecke 100.
- Eine fünfte Maschineneinstellgrösse MPki, k=l...l, i=5 ist ein Sollwert des Nachdruckes in der Nachdruckphase II.
- Eine sechste Maschineneinstellgrösse MPki, k=l...l, i=6 ist eine Temperatur der Schmelze MT.
- Eine siebte Maschineneinstellgrösse MPki, k=l...l, i=7 ist eine Temperatur des Spritzgiesswerkzeuges 11.

Die Steuereinheit 12 erzeugt für die Maschineneinstellgrössen MPki, k=1...l, i=1...n Maschineneinstelldaten MPD. Die Maschineneinstelldaten MPD werden auch mit dem Zyklus-Index k und dem Maschineneinstellgrösse-Index i als MPDki, k=1...l, i=1...n dargestellt. Die Maschineneinstelldaten MPDki, k=1...l, i=1...n sind digitale Daten.

Die Spritzgiessmaschine 1 weist als Bestandteil mindestens eine Sensoreinheit 13 auf. Die Sensoreinheit 13 ist an der Kavität 110 angeordnet. Die Sensoreinheit 13 kann ein Drucksensor, ein Temperatursensor, usw. sein. Vorzugsweise ist die Sensoreinheit 13 ein Drucksensor, welcher einen zeitlichen Verlauf eines Werkzeuginnendruckes P in der Kavität 110 misst. Der Drucksensor kann ein piezoelektrischer Drucksensor, ein piezoresistiver Drucksensor, usw. sein. Vorzugsweise ist der Drucksensor ein piezoelektrischer Drucksensor, welcher mit einer Verstärkereinheit elektrisch verbunden ist. Der piezoelektrische Drucksensor und die Verstärkereinheit erzeugen für den gemessenen zeitlichen Verlauf des Werkzeuginnendruckes P eine zeitliche Folge von Sensordaten XD. Die Sensordaten XD sind digitale Daten. Die Sensordaten XD werden auch mit dem Zyklus-Index k und einem Sensordaten-Index j als XDkj, k=l...l da, j=l...m dargestellt. Der Sensordaten-Index j bezeichnet die einzelnen Sensordaten XDkj, k=1...l, j=l...m und die Sensordaten-Zahl m bezeichnet die Anzahl der Sensordaten XDkj, k=1...l, j=1...m. Die Sensordaten XDkj, k=1...l, j=1...m folgen sich zu Zeiten tj, j=1...m zeitlich aufeinander und befinden sind vorzugsweise in einem konstanten zeitlichen Abstand zueinander. Der piezoelektrische Drucksensor misst den Werkzeuginnendruck P als elektrische Polarisationsladungen. Ein einzelnes Sensordatenelement XDkj, k=1...l, j=l...m bezeichnet eine Menge von elektrischen Polarisationsladungen zu einer Zeit tj, j=1...m. Die Menge der elektrischen Polarisationsladungen ist proportional zur Grösse des Werkzeuginnendruckes P. Der piezoelektrische Drucksensor misst den Werkzeuginnendruck P typischerweise mit einer Messgenauigkeit von 1 %. Der piezoelektrische Drucksensor misst den Werkzeuginnendruck P mit einer zeitlichen Auflösung von kleiner/gleich 0.01 Hz. Für einen Spritzgiessprozess mit einer typischen Zyklusdauer von 10 sec misst der piezoelektrische Drucksensor die Werkzeuginnendruck P somit mindestens 1000 Mal und erzeugt eine zeitliche Folge von mindestens 1000 Sensordaten XDkj, k=1...l, j=l...m.

Die Spritzgiessmaschine 1 weist als Bestandteil mindestens eine Auswerteeinheit 14. Die Auswerteeinheit 14 weist mindestens einen Datenprozessor 140, mindestens einen Datenspeicher 141, mindestens eine Ausgabeeinheit 142 und mindestens eine Eingabeeinheit 143 auf. Mindestens ein Computerprogramm CP ist im Datenspeicher 141 gespeichert und in den Datenprozessor 140 ladbar. Die Auswerteeinheit 14 ist über Signalleitungen mit der Steuereinheit 12 und der Sensoreinheit 13 verbunden. Über die Signalleitungen empfängt die Auswerteeinheit 14 von der Steuereinheit 12 die Maschineneinstelldaten MPDki, k=1...l, i=1...n und sie empfängt von der Sensoreinheit 13 die zeitliche Folgen von Sensordaten XDkj, k=1...l, j=1...m.

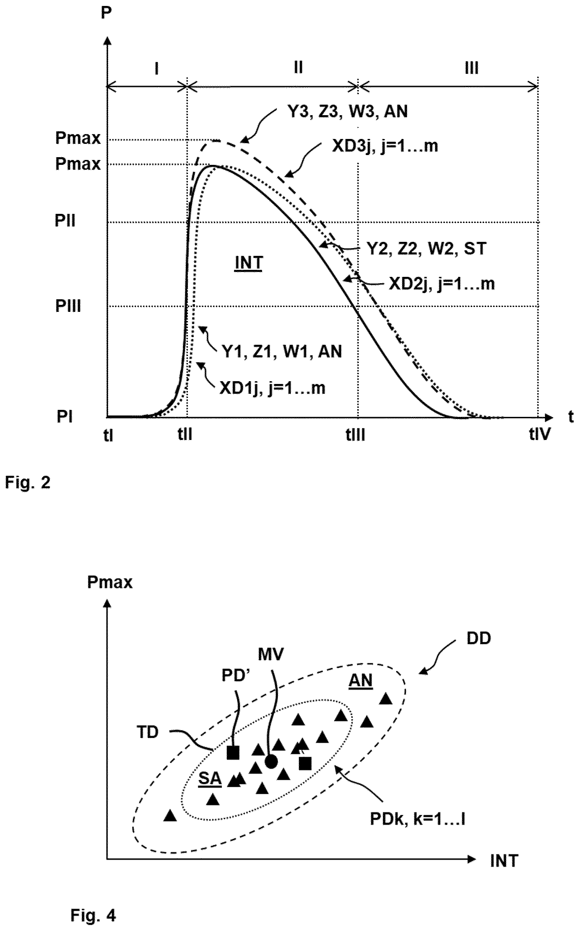

Das in den Datenprozessor 140 geladene Computerprogramm CP veranlasst die Auswerteeinheit 14 eine zeitliche Folge von Sensordaten XDkj, k=1...l, j=1...m von Zyklen Zk, k=1...l in den Datenprozessor 140 zu laden und die geladenen Sensordaten XDkj, k=1...l, j=1...m auszuwerten. Ein erstes Auswertungsergebnis der Sensordaten XDkj, k=1...l, j=1...m ist die Ermittlung von mindestens einer Werkzeuginnendrucckurve Yk, k=1...l, was in Fig. 2 zu sehen ist. Die Werkzeuginnendruckkurve Yk, k=l...l kann auf der Ausgabeeinheit 142 dargestellt werden. Vorzugsweise ist die Ausgabeeinheit 142 ein Bildschirm, so dass eine Bedienperson der Spritzgiessmaschine 1 von der auf dem Bildschirm dargestellten Werkzeuginnendruckkurve Yk, k=l...l Kenntnis erlangt. Die Darstellung der Werkzeuginnendruckkurve Yk, k=l...l weist eine Ordinate und eine Abszisse auf. Die Ordinate bezeichnet den Werkzeuginnendruck P, die Ordinate bezeichnet die Zeit t. Die Fläche unter halb der Werkzeuginnendruckkurve Yk, k=l...l wird Integral INT genannt.

Nachfolgend wird der Spritzgussprozess anhand der Werkzeuginnendruckkurve Yk, k=l...l erläutert.

Die Einspritzphase I beginnt zu einem Zeitpunkt tI mit einem initialen Werkzeuginnendruck PI und endet an einem Zeitpunkt tII mit einem Fülldruck PII. In der Einspritzphase I verflüssigt die Einspritzvorrichtung 10 Werkstoff zu einer Schmelze MT und drückt die Schmelze MT mit der Schnecke 100 gegen die Düse 101. Durch die Düse 101 wird die Schmelze MT in die Kavität 110 des Spritzgiesswerkzeuges 11 eingespritzt. Je höher die Einspritzgeschwindigkeit ist, desto rascher wird die Kavität 110 mit Schmelze MT gefüllt. Beim Füllen der Kavität 110 mit Schmelze MT steigt der Werkzeuginnendruck P in einer kurzen Zeitspanne auf einen maximalen Werkzeuginnendruck Pmax. Kurz vor Erfassen des maximalen Werkzeuginnendruckes Pmax ist die Kavität 110 vollständig mit Schmelze MT gefüllt und der Fülldruck PII wird gemessen. Der Zeitpunkt tII, an dem die Kavität vollständig mit Schmelze gefüllt ist, ist der Umschaltzeitpunkt tII. Die Einspritzphase I ist beendet.

Die Nachdruckphase II beginnt am Umschaltzeitpunkt tII. In der Nachdruckphase II übt die Einspritzvorrichtung 10 an der Düse 101 einen Nachdruck auf die Schmelze MT in der Kavität 110 aus. Auch wird Schwindung der abkühlenden Schmelze MT kompensiert, in dem weitere Schmelze MT in die Kavität 110 fliesst. Die Schnecke 100 übt dabei eine Entlastungsbewegung aus. Der Nachdruck beeinflusst eine Höhe des Werkzeuginnendruckes P besonders im Bereich des maximalen Werkzeuginnendruckes Pmax, wo die Schmelze MT kurzzeitig komprimiert ist und der Werkzeuginnendruck P grösser als der Fülldruck PII ist. Dabei erniedrigt die Steuereinheit 12 den Werkzeuginnendruck P auf einen Siegelpunktdruck PIII. Die Schmelze MT wird in der Kavität 110 zum Erstarren gebracht und kühlt dabei ab. Die Nachdruckphase II endet an einem Zeitpunkt tIII mit dem Siegelpunktdruck PIII. Die Nachdruckzeit beeinflusst die Geschwindigkeit, mit welcher der Werkzeuginnendruck P abfällt.

Zum Zeitpunkt tIII beginnt die Restkühlphase III, die erstarrte Schmelze MT kühlt weiter ab. Der Zeitpunkt tIII wird auch Siegelpunkt tIII genannt, zu dem die Schmelze MT im Bereich der Düse 101 der Einspritzvorrichtung 10 so weit erstarrt ist, dass keine Schmelze MT mehr in die Kavität 110 fliessen kann, die Kavität 110 ist versiegelt. Das Spritzgiesswerkzeug 11 ist über Kühlmittel kühlbar. Die Spritzgiessmaschine 1 kann die Werkzeugtemperatur die Kavität 110 in der Nachdruckphase II und in der Restkühlphase III mehr oder weniger stark kühlen. Die Restkühlphase III endet zum Zeitpunkt tIV, an dem das fertige Stückgut W aus der Kavität 110 ausgestossen wird.

Ein weiteres Auswertungsergebnis der Sensordaten XDkj, k=l...l, j=l...m ist die Ermittlung von mindestens einem Prozessparameter PP, welcher den Werkzeuginnendruckkurven Yk, k=l...l zu entnehmen ist. Der Prozessparameter PP wird auch mit dem Zyklus-Index k und einem Prozessparameter-Index m als PPkh, k=1...l, h=1...o dargestellt. Der Prozessparameter-Index h bezeichnet die einzelnen Prozessparameter PPkh, k=1...l, h=1...o und die Prozessparameter-Zahl o bezeichnet die Anzahl der Prozessparameter PPkh, k=1...l, h=1...o. Konkret ist der Prozessparameter PPkh, k=1...l, h=1...o:
- Ein erster Prozessparameter PPkh, k=1...l, h=1 ist der maximale Werkzeuginnendruck Pmax.
- Ein zweiter Prozessparameter PPkh, k=1...l, h=2 ist das Integral INT der Werkzeuginnendruckkurve Yk, k=1...l.
- Ein dritter Prozessparameter PPkh, k=1...l, h=3 sind die nachfolgend beschriebenen Punktdaten PDk, k=1...l.

Fig 2 zeigt drei Werkzeuginnendruckkurven Yk, k=1...3 von drei Zyklen Zk, k=1...3 bei der Herstellung von drei Stückgüter Wk, k=1...3. Die erste Werkzeuginnendruckkurve Y1 ist punktiert dargestellt. Die zweite Werkzeuginnendruckkurve Y2 ist als durchgezogene Linie dargestellt. Die dritte Werkzeuginnendruckkurve Y2 ist als unterbrochene Linie dargestellt. Die drei Werkzeuginnendruckkurven Yk, k=1...3 unterscheiden sich in der Gestalt voneinander. So weist die erste Werkzeuginnendruckkurve Y1 einen langsameren Druckanstieg beim Füllen der Kavität 110 als die zweite und dritte Werkzeuginnendruckkurve Y2, Y3 auf. Auch weist die dritte Werkzeuginnendruckkurve Y3 einen grösseren maximalen Werkzeuginnendruck Pmax als die ersten beiden Werkzeuginnendrucckurve Y1, Y2 auf. Und die dritte Werkzeuginnendruckkurve Y3 weist ein grösseres Integral INT als die ersten beiden Werkzeuginnendruckkurve Y1, Y2 auf.

Die Gestalt der der ersten Werkzeuginnendruckkurve Y1 mit einem vergleichsweise langsamen Druckanstieg beim Füllen der Kavität 110 ist ein Hinweis für eine Anomalie AN beim Herstellprozess. Und auch die Gestalt der dritten Werkzeuginnendruckkurve Y3 mit einem vergleichsweise grossen maximale Werkzeuginnendruck Pmax stellt einen Hinweis für eine Anomalie AN beim Herstellprozess dar. Auch weist die Gestalt der dritten Werkzeuginnendruckkurve Y3 mit einem vergleichsweise grossen Integral INT auf eine Anomalie AN beim Herstellprozess hin. Nur die Gestalt der zweiten Werkzeuginnendruckkurve Y3 mit einem vergleichsweise nicht langsamen Druckanstieg, einem vergleichsweise nicht zu grossem maximalen Werkzeuginnendruck Pmax und einem vergleichsweise nicht zu grossem Integral INT weist auf Stabilität ST beim Herstellprozess hin.

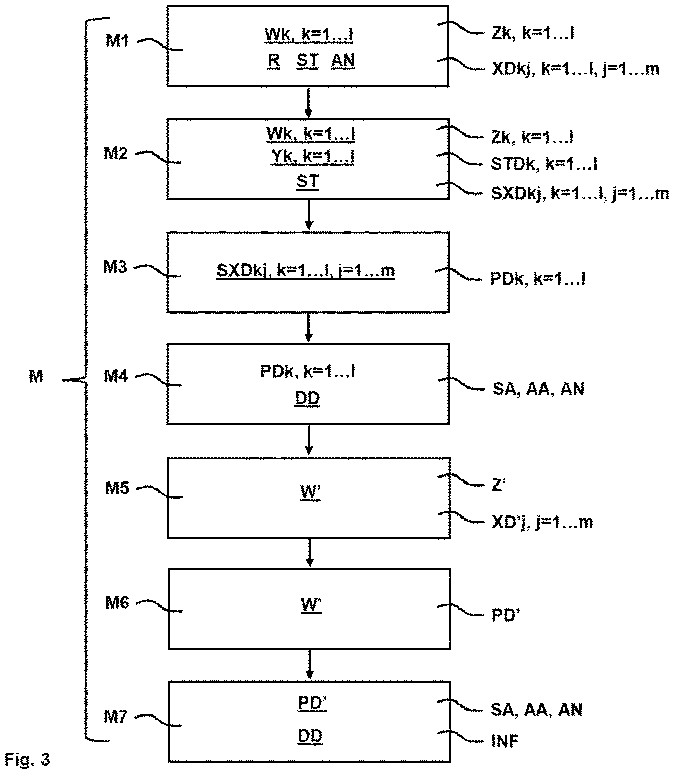

Fig. 3 zeigt ein Flussdiagramm mit mehreren Verfahrensschritten M1 bis M7 des Verfahrens M zur Überwachung eines zyklischen Herstellprozesses mit mehreren Zyklen Zk, k=l...l, wo in jedem Zyklus Zk, k=l...l mindestens ein Stückgut Wk, k=l...l hergestellt wird.

In einem ersten Verfahrensschritt M1 wird für jeden Zyklus Zk, k=l...l mindestens eine zeitliche Folge von Sensordaten XDkj, k=l...l, j=l...m des Herstellprozesses automatisch bereitgestellt, welche Sensordaten XDkj, k=l...l, j=l...m in einer Wirkungsbeziehung R mit der Stabilität ST und der Anomalie AN des Herstellprozesses stehen. Bei Stabilität ST des Herstellprozesses ist das Stückgut Wk, k=1...l fehlerfrei. Bei Anomalie AN des Herstellprozesses ist das Stückgut Wk, k=1...l nicht fehlerfrei. Zur Ausführung des ersten Verfahrensschrittes M1 werden die Sensordaten XDkj, k=1...l, j=1...m von der Sensoreinheit 13 erzeugt. Die Bereitstellung der Sensordaten XDkj, k=1...l, j=1...m erfolgt automatisch in der Auswerteeinheit 14. Das in den Datenprozessor 140 geladene Computerprogramm CP veranlasst die Auswerteeinheit 14, die Sensordaten XDkj, k=1...l, j=1...m automatisch in den Datenprozessor 140 zu laden. Im Sinne der vorliegenden Erfindung bedeutet "automatisch", dass die Bestandteile der Spritzgiessmaschine 1 eine Tätigkeit selbsttätig, ohne Einwirkung einer Bedienperson der Spritzgiessmaschine 1 ausführen.

In einem zweiten Verfahrensschritt M2 wird für jeden Zyklus Zk, k=1...l die Stabilität ST des Herstellprozesses ermittelt. Vorzugsweise führt die Bedienperson der Spritzgiessmaschine 1 die Ermittlung der Stabilität ST des Herstellprozesses aus. Dazu hat die Bedienperson vielfältige Möglichkeiten. So kann die Bedienperson visuell ein in einem Zyklus Zk, k=1...l hergestelltes Stückgut Wk, k=1...l überprüfen und ermitteln, ob das Stückgut Wk, k=1...l fehlerfrei ist. Auch kann die Bedienperson visuell eine auf der Ausgabeeinheit 142 dargestellte Werkzeuginnendruckkurve Yk, k=1...l überprüfen und anhand der Gestalt der Werkzeuginnendruckkurve Yk, k=1...l einen Hinweis auf die Stabilität ST des Herstellprozesses ermitteln.

Bei Stabilität ST des Herstellprozesses erzeugt die Bedienperson der Spritzgiessmaschine 1 Stabilitätsbestätigungsdaten STDk, k=l...l. Die Stabilitätsbestätigungsdaten STDk, k=l...l sind digitale Daten. Die Erzeugung der Stabilitätsbestätigungsdaten STDk, k=l...l kann auf vielfältige Weise erfolgen. So kann die Bedienperson über die Eingabeeinheit 143 Stabilitätsbestätigungsdaten STDk, k=l...l in die Auswerteeinheit 14 eingeben. Die Eingabeeinheit 143 ist eine Tastatur, ein berührungsempfindlicher Bildschirm, usw. Die Bedienperson kann zur Eingabe der Stabilitätsbestätigungsdaten STDk, k=l...l eine Tastenkombination auf der Tastatur betätigen, oder sie kann einen bestimmten Bereich des berührungsempfindlichen Bildschirmes berühren.

Das in den Datenprozessor 140 geladene Computerprogramm CP veranlasst die Auswerteeinheit 14, die Stabilitätsbestätigungsdaten STDk, k=l...l automatisch in den Datenprozessor 140 zu laden und bei Stabilität ST des Herstellprozesses die Sensordaten XDkj, k=l...l, j=l...m als stabile Sensordaten SXDkj, k=l...l, j=l...m zu markieren.

In einem dritten Verfahrensschritt M3 werden die stabilen Sensordaten SXDkj, k=l...l, j=l...m automatisch dimensional zu Punktdaten PDk, k=l...l reduziert. Die Dimensionsreduktion erfolgt automatisch in der Auswerteeinheit 14. Das in den Datenprozessor 140 geladene Computerprogramm CP veranlasst die Auswerteeinheit 14 die stabilen Sensordaten SXDkj, k=1...l, j=1...m in einen Raum mit mindestens zwei Hauptkomponentenachsen zu projizieren. Die beiden Hauptkomponentenachsen sind das Ergebnis der Berechnung eines Neuronalen Netzes oder die Richtungen der grössten Streuung der stabilen Sensordaten SXDkj, k=1...l, j=1...m. Das Projektionsergebnis sind die Punktdaten PDk, k=1...l. Die Dimensionsreduktion kann für die Bedienperson der Spritzgiessmaschine 1 auf der Ausgabeeinheit 142 dargestellt werden, was in Fig. 4 zu sehen ist. Die beiden Hauptkomponentenachsen sind als Ordinate und als Abszisse aufgetragen. Die Ordinate bezeichnet als erste Hauptkomponente den ersten Prozessparameter PPkh, k=1...l, h=1, also den maximalen Werkzeuginnendruck Pmax. Die Abszisse bezeichnet als zweite Hauptkomponente den zweiten Prozessparameter PPkh, k=1...l, h=2, also das Integral INT der Werkzeuginnendruckkurve Yk, k=1...l. Die Punktdaten PDk, k=1...l sind als Dreiecke dargestellt.

In einem vierten Verfahrensschritt M4 wird automatisch eine Dichteverteilung DD der Punktdaten PDk, k=1...l gebildet. Die Bildung der Dichteverteilung DD erfolgt automatisch in der Auswerteeinheit 14. Das in den Datenprozessor 140 geladene Computerprogramm CP veranlasst die Auswerteeinheit 14, die Punktdaten PDk, k=1...l automatisch in den Datenprozessor 140 zu laden und mit den Punktdaten PDk, k=1...l die Dichteverteilung DD zu bilden. Die Dichteverteilung DD weist mindestens einen Stabilitätsbereich SA der Punktdaten PDk, k=1...l und mindestens einen Anomaliebereich AA der Punktdaten PDk, k=1...l auf. Die Dichteverteilung ist eine aus der mathematischen Statistik bekannte Häufigkeitsverteilung. Die Dichteverteilung gibt an, wie dicht die Punktdaten PDk, k=1...l um einen Mittelwert MV der Punktdaten verteilt sind. Punktdaten PDk, k=1...l, welche sich in der Nähe des Mittelwertes MV befinden, liegen im Stabilitätsbereich. Hingegen liegen Punktdaten PDk, k=1...l, welche vom Mittelwert MV entfernt sind, im Anomaliebereich. Die Ermittlung des Mittelwertes MV kann auf vielfältige Weise erfolgen. So kann der Mittelwert MV ein arithmetischer Mittelwert, ein geometrischer Mittelwert usw. sein. Der Mittelwert MV kann aber auch derjenige Wert der Punktdaten PDk, k=l...l sein, der mit grosser Wahrscheinlichkeit einem Herstellprozess mit Stabilität ST entspricht. Punktdaten PDk, k=l...l im Anomaliebereich AA entsprechen einer Anomalie AN des Herstellprozesses.

Die Dichteverteilung DD kann für die Bedienperson der Spritzgiessmaschine 1 auf der Ausgabeeinheit 142 dargestellt werden, was in Fig. 4 zu sehen ist. Die Dichteverteilung DD ist als strichlinierte Ellipse markiert. Die Dichteverteilung DD weist einen Mittelwert MV der Punktdaten PDk, k=l...l auf. Der Mittelwert MV ist als schwarzer Kreis markiert. Im Bereich um den Mittelwert MV ist die räumliche Verteilung der Punktdaten PDk, k=l...l am dichtesten. Die Dichteverteilung DD weist eine Grenzdistanz TD zum Mittelwert MV auf. Die Grenzdistanz TD ist als punktlinierte Ellipse markiert. Punktdaten PDk, k=l...l, welche ausserhalb der Grenzdistanz TD zum Mittelwert MV liegen, entsprechen einer Anomalie AN des Herstellprozesses. Die Ermittlung der Grenzdistanz TD kann auf vielfältige Weise erfolgen. So kann die Grenzdistanz TD ein euklidischer Abstand, ein Mahalanobis Abstand, usw. sein.

In einem fünften Verfahrensschritt M5 wird für einen weiteren Zyklus Z' automatisch mindestens eine zeitliche Folge von weiteren Sensordaten XD'j, j=l...m des Herstellprozesses eines weiteren Stückgutes W' bereitgestellt. Die weiteren Sensordaten XD'j, j=l...m werden von der Sensoreinheit 13 erzeugt und der Auswerteeinheit 14 automatisch bereitgestellt. Das in den Datenprozessor 140 geladene Computerprogramm CP veranlasst die Auswerteeinheit 14 die weiteren Sensordaten XD'j, j=l...m in den Datenprozessor 140 zu laden.

In einem sechsten Verfahrensschritt M6 wird die zeitliche Folge von weiteren Sensordaten XD'j, j=l...m des weiteren Stückgutes W' automatisch dimensional zu weiteren Punktdaten PD' reduziert. Das in den Datenprozessor 140 geladene Computerprogramm CP veranlasst die Auswerteeinheit 14 die weiteren Sensordaten X'Dj, j=l...m in den Raum mit mindestens zwei Hauptkomponentenachsen zu projizieren. Dies ist bereits im dritten Verfahrensschritt M3 beschrieben und in Fig. 4 dargestellt. Die weiteren Punktdaten PD' sind als Quadrate dargestellt.

In einem siebten Verfahrensschritt M7 wird automatisch ermittelt, ob die weiteren Punktdaten PD' im Stabilitätsbereich SA liegen oder ob die weiteren Punktdaten PD' im Anomaliebereich AA liegen. Die Ermittlung der Lage der weiteren Punktdaten PD' im Stabilitätsbereich SA oder im Anomaliebereich AA erfolgt durch die Auswerteeinheit 14 und wird durch das in den Datenprozessor 140 geladene Computerprogramm CP veranlasst. In Fig. 4 liegen die weiteren Punktdaten PD' im Stabilitätsbereich SA. Die Auswerteeinheit 14 erzeugt eine Prozessinformation PI, welche angibt, ob beim Herstellprozess des weiteren Stückgutes W' Stabilität ST oder Anomalie AN vorliegt.

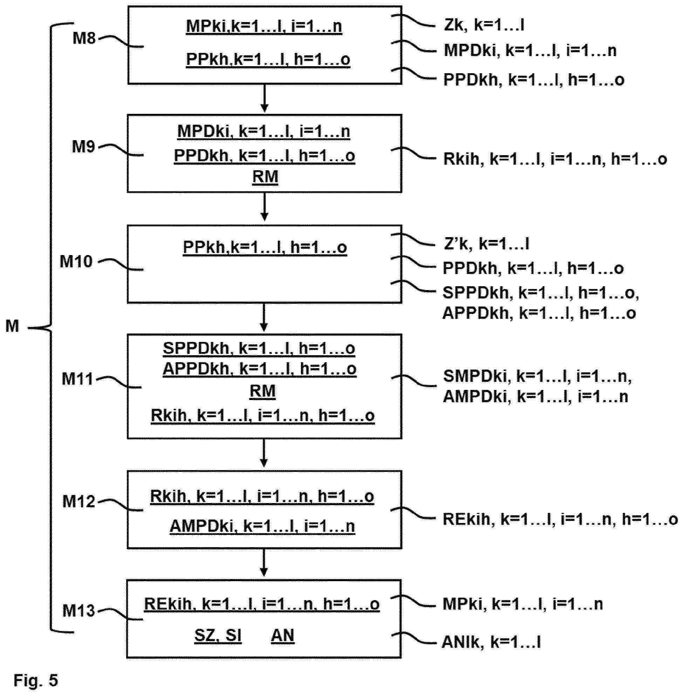

Fig. 5 zeigt ein Flussdiagramm mit mehreren Verfahrensschritten M8 bis M13 des Verfahrens M zur Überwachung eines zyklischen Herstellprozesses mit mehreren Zyklen Zk, k=1...l, wo in jedem Zyklus Zk, k=1...l mindestens ein Stückgut Wk, k=1...l hergestellt wird.

In einem achten Verfahrensschritt M8 wird in mehreren Zyklen Zk, k=1...l in jedem Zyklus Zk, k=1...l mindestens eine Maschineneinstellgrösse MPki, k=1...l, i=1...n variiert und für jeden Zyklus Zk, k=1...l der Maschineneinstellgrössevariation werden Maschineneinstelldaten MPDki, k=1...l, i=1...n der Maschineneinstellgrössevariation bereitgestellt. Die Ausführung des achten Verfahrensschrittes M8 erfolgt durch die Steuereinheit 12. Sie stellt der Auswerteeinheit 14 für jeden Zyklus Zk, k=1...l der Maschineneinstellgrössevariation Maschineneinstelldaten MPDki, k=1...l, i=1...n der Maschineneinstellgrössevariation bereit.

Auch werden für jeden Zyklus Zk, k=1...l der Maschineneinstellgrössevariation Prozessparameter PPkh, k=1...l, h=1...o der Maschineneinstellgrössevariation ermittelt und für die ermittelten Prozessparameter PPkh, k=1...l, h=1...o werden Prozessparameterdaten PPDkh, k=1...l, h=1...o bereitgestellt. Die Ermittlung der Prozessparameter PPkh, k=1...l, h=1...o und die Bereitstellung der Prozessparameterdaten PPDkh, k=1...l, h=1...o, welche zusätzliche Hauptkomponentenrichtungen gemäss Abschnitt [0038] darstellen, erfolgt automatisch durch die Auswerteeinheit 14 und wird durch das in den Datenprozessor 140 geladene Computerprogramm CP veranlasst.

In einem neunten Verfahrensschritt M9 wird ein Regressionsmodell RM bereitgestellt, in welches Regressionsmodell RM die Maschineneinstelldaten MPDki, k=1...l, i=1...n und die Prozessparameterdaten PPDkh, k=1...l, h=1...o automatisch eingegeben werden. Dabei ermittelt das Regressionsmodell RM eine Wirkungsbeziehung Rkih, k=1...l, i=1...n, h=1...0 zwischen den Maschineneinstelldaten MPDki, k=1...l, i=1...n und den Prozessparameterdaten PPDkh, k=1...l, h=1...o. Die Ausführung des neunten Verfahrensschrittes M9 durch die Auswerteeinheit 14 wird durch das in den Datenprozessor 140 geladene Computerprogramm CP veranlasst. Wird lediglich eine einzelne Kombination aus Maschineneinstellgrössen MPki, k=1...l, i=1...n über mehrere Zyklen Zk, k=1...l bereitgestellt (keine Variation der Parameter), erfolgt eine Punktkalibrierung, bei der lediglich der Mittelwert und die Standardabweichung der Prozessparameterdaten PPDkh, k=1...l, h=1...o ermittelt werden.

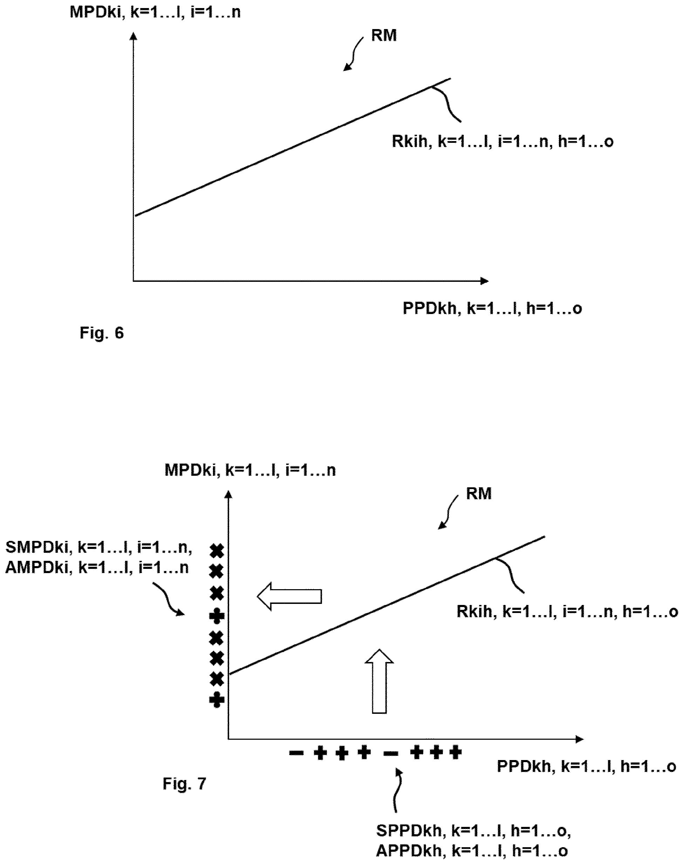

Fig. 6 zeigt eine graphische Darstellung der Ermittlung der Wirkungsbeziehung Rkih, k=1...l, i=1...n, h=1...0. Die Maschineneinstelldaten MPDki, k=1...l, i=1...n sind auf der Ordinate aufgetragen, Prozessparameterdaten PPDkh, k=1...l, h=1...o sind auf der Abszisse aufgetragen. Nach der Methode der kleinsten Quadrate wird zwischen den Maschineneinstelldaten MPDki, k=1...l, i=1...n und den Prozessparameterdaten PPDkh, k=l...l, h=l...o die Wirkungsbeziehung Rkih, k=1...l, i=1...n, h=1...0 ermittelt. Vorzugsweise ist das Regressionsmodell RM ein multivariates Regressionsmodell mit mehreren unabhängigen Variablen und mehreren abhängigen Variablen, welche in einem weitgehend linearen Verhältnis zueinanderstehen. Im Falle einer Punktkalibrierung werden als Wirkbeziehung vereinfacht der Mittelwert PPDkhM der Kalibrierung sowie dessen Standardabweichung ermittelt.

In einem zehnten Verfahrensschritt M10 werden für mehrere weitere Zyklen Z'k, k=1...l Prozessparameter PPkh, k=1...l, h=1...o ermittelt und für die ermittelten Prozessparameter PPkh, k=1...l, h=1...o werden Prozessparameterdaten PPDkh, k=1...l, h=1...o bereitgestellt. Die Ermittlung der Prozessparameter PPkh, k=1...l, h=1...o und die Bereitstellung der Prozessparameterdaten PPDkh, k=1...l, h=1...o erfolgt automatisch durch die Auswerteeinheit 14 und wird durch das in den Datenprozessor 140 geladene Computerprogramm CP veranlasst.

Auch wird im zehnten Verfahrensschritt M10 für jeden weiteren Zyklus Z'k, k=1...l die Stabilität ST des Herstellprozesses ermittelt. Vorzugsweise führt die Bedienperson der Spritzgiessmaschine 1 die Ermittlung der Stabilität ST des Herstellprozessen aus, was bereits im zweiten Verfahrensschritt M2 beschrieben ist, worauf verwiesen wird. Bei Stabilität ST des Herstellprozesses erzeugt die Bedienperson der Spritzgiessmaschine 1 Stabilitätsbestätigungsdaten SDk, k=1...l. Auch dies ist bereits im zweiten Verfahrensschritt M2 beschrieben, worauf verwiesen wird.

Bei Stabilität ST des Herstellprozesses werden die Prozessparameterdaten PPDkh, k=1...l, h=1...o automatisch als stabile Prozessparameterdaten SPPDkh, k=1...l, h=1...o markiert. Bei Anomalie AN des Herstellprozesses werden die Prozessparameterdaten PPDkh, k=1...l, h=1...o automatisch als anomale Prozessparameterdaten APPDkh, k=1...l, h=1...o markiert. Die Markierung der Sensordaten XDkj, k=1...l, j=1...m in stabile Prozessparameterdaten SPPDkh, k=1...l, h=1...o oder anomale Prozessparameterdaten APPDkh, k=1...l, h=1...o erfolgt in der Auswerteeinheit 14 und wird durch das in den Datenprozessor 140 geladene Computerprogramm CP veranlasst.

In einem elften Verfahrensschritt M11 werden die stabilen Prozessparameterdaten SPPDkh, k=1...l, h=1...o und die anomalen Prozessparameterdaten APPDkh, k=1...l, h=1...o in das Regressionsmodell RM eingegeben und über die Wirkungsbeziehung Rkih, k=1...l, i=1...n, h=1...o werden zu stabilen Prozessparameterdaten SPPDkh, k=1...l, h=1...o korrespondierende stabile Maschineneinstelldaten SMPDki, k=1...l, i=1...n und zu den anomalen Prozessparameterdaten APPDkh, k=1...l, h=1...o korrespondierende anomale Maschineneinstelldaten AMPDki, k=1...l, i=1...n ermittelt. Die stabilen Maschineneinstelldaten SMPDki, k=1...l, i=1...n und die anomalen Maschineneinstelldaten AMPDki, k=1...l, i=1...n werden ohne Zyklus-Index k und ohne Maschineneinstellgrösse-Index i auch nur als stabile Maschineneinstelldaten SMPD und anomale Maschinendaten AMPD bezeichnet. Die Ausführung des elften Verfahrensschrittes M11 durch die Auswerteeinheit 14 wird durch das in den Datenprozessor 140 geladene Computerprogramm CP veranlasst.

Fig. 7 zeigt eine graphische Darstellung der Ermittlung der stabilen Maschineneinstelldaten SMPDki, k=1...l, i=1...n und der anomalen Maschineneinstelldaten AMPDki, k=1...l, i=1...n. Ausgehend von der Wirkungsbeziehung Rkih, k=1...l, i=1...n, h=1...0 gemäss Fig. 6 sind die stabilen Prozessparameterdaten SPPDkh, k=1...l, h=1...o und die anomalen Prozessparameterdaten APPDkh, k=1...l, h=1...o auf der Abszisse aufgetragen. Über die Wirkungsbeziehung Rkih, k=1...l, i=1...n, h=1...0 werden die korrespondierenden stabilen Maschineneinstelldaten SMPDki, k=1...l, i=1...n und die korrespondierenden anomalen Maschineneinstelldaten AMPDki, k=1...l, i=1...n auf der Ordinate ermittelt. Die Korrespondenz ist durch Pfeile dargestellt.

In einem zwölften Verfahrensschritt M12 werden Residuen REkih, k=1...l, i=1...n, h=1...o der anomalen Maschineneinstelldaten AMPDki, k=1...l, i=1...n zur Wirkungsbeziehung Rkih, k=1...l, i=1...n, h=1...o gebildet. Die Residuen REkih, k=1...l, i=1...n, h=1...o sind die Differenz zwischen den anomalen Maschineneinstelldaten AMPDki, k=1...l, i=1...n und der Wirkungsbeziehung Rkih, k=1...l, i=1...n, h=1...o. Die Residuen REkih, k=1...l, i=1...n, h=1...o werden ohne Zyklus-Index k und ohne Maschineneinstellgrösse-Index i und ohne Prozessparameter-Index h auch nur als Residuen RE bezeichnet. Im Falle einer Punktkalibrierung wird als Residuum die Abweichung zum Mittelpunkt der Kalibrierung als ein Vielfaches der ermittelten Standardabweichung bereitgestellt. Dies vermittelt der Bedienperson der Spritgiessmaschine 1 im Falle einer Anomalie AN Information über die Richtung und den Betrag der Abweichung der Parameter. Die Ausführung des zwölften Verfahrensschrittes M12 durch die Auswerteeinheit 14 wird durch das in den Datenprozessor 140 geladene Computerprogramm CP veranlasst.

In einem dreizehnten Verfahrensschritt M13 werden die Residuen REkih, k=1...l, i=1...n, h=1...o nach Grösse SZ und Vorzeichen SI geordnet. Die Ausführung des dreizehnten Verfahrensschrittes M13 durch die Auswerteeinheit 14 wird durch das in den Datenprozessor 140 geladene Computerprogramm CP veranlasst. Die Auswerteeinheit 14 erzeugt eine Anomalieinformation ANIk, k=1...l, welche angibt, welche Maschineneinstellgrössen MPki, k=1...l, i=1...n, deren Residuen REkih, k=1...l, i=1...n, h=1...o nach Grösse SZ und Vorzeichen SI am höchsten geordnet sind, die Ursache für eine Anomalie AN des Herstellprozesses bilden. Die Anomalieinformation ANIk, k=1...l wird ohne Zyklus-Index k auch als ANI bezeichnet.

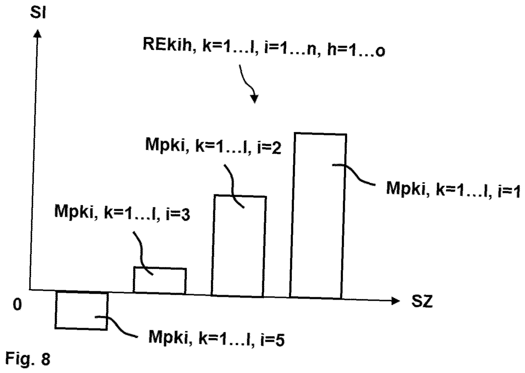

Fig. 8 zeigt eine graphische Darstellung der Ordnung von Residuen REkih, k=1...l, i=1...n, h=1...o nach Grösse SZ und Vorzeichen SI. In der Graphik von Fig. 8 sind die Grösse SZ auf der Abszisse und das Vorzeichen SI auf der Ordinate aufgetragen. Vier Residuen REkih, k=1...l, i=1...n, h=1...o sind dargestellt:
- Ein Residuum REkih, k=1...l, i=5, h=1...o, welches über den Maschineneinstellgrösse-Index i=5 der fünften Maschineneinstellgrösse MPki, k=1...l, i=5, also der Temperatur der Schmelze MT entspricht, weist ein negatives Vorzeichen SI und die vergleichsweise kleinste Grösse SZ auf.
- Ein Residuum REkih, k=1...l, i=3, h=1...o, welches über den Maschineneinstellgrösse-Index i=3 der dritten Maschineneinstellgrösse MPki, k=1...l, i=3, also dem Umschaltzeitpunkt tII entspricht, weist ein positives Vorzeichen SI und die vergleichsweise zweitkleinste Grösse SZ auf.
- Ein Residuum REkih, k=1...l, i=2, h=1...o, welches über den Maschineneinstellgrösse-Index i=2 der zweiten Maschineneinstellgrösse MPki, k=1...l, i=2, also der Einspritzgeschwindigkeit der Schmelze MT in die Kavität 110 entspricht, weist ein positives Vorzeichen SI und die vergleichsweise zweitgrösste Grösse SZ auf.
- Ein Residuum REkih, k=1...l, i=1, h=1...o, welches über den Maschineneinstellgrösse-Index i=1 der ersten Maschineneinstellgrösse MPki, k=1...l, i=1, also der Dosiergeschwindigkeit der Schnecke 100 entspricht, weist ein positives Vorzeichen SI und die vergleichsweise grösste Grösse SZ auf.

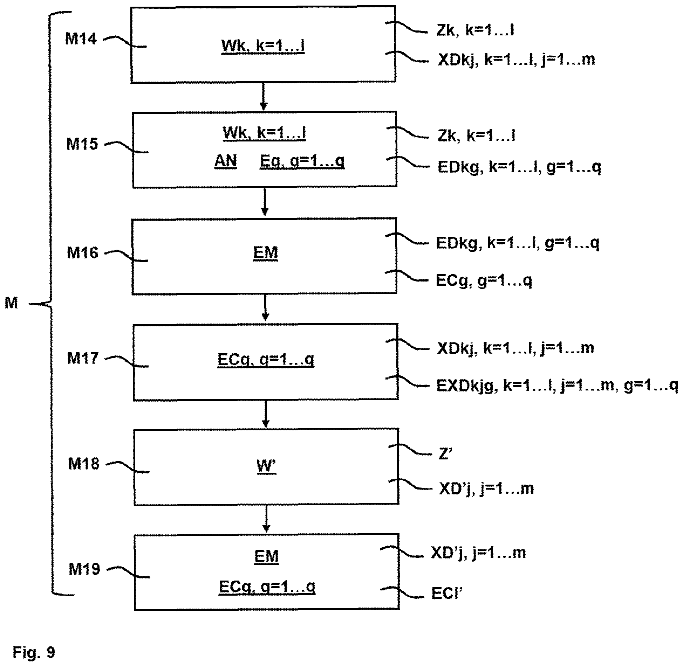

Fig. 9 zeigt ein Flussdiagramm mit mehreren Verfahrensschritten M14 bis M19 des Verfahrens M zur Überwachung eines zyklischen Herstellprozesses.

In einem vierzehnten Verfahrensschritt M14 wird in mehreren Zyklen Zk, k=1...l in jedem Zyklus Zk, k=1...l mindestens ein Stückgut Wk, k=1...l hergestellt und für jeden Zyklus Zk, k=1...l wird mindestens eine zeitliche Folge von Sensordaten XDkj, k=1...l, j=1...m des Herstellprozesses automatisch bereitgestellt. Die Bereitstellung der Sensordaten XDkj, k=1...l, j=1...m erfolgt in der Auswerteeinheit 14. Das in den Datenprozessor 140 geladene Computerprogramm CP veranlasst die Auswerteeinheit 14, die Sensordaten XDkj, k=1...l, j=1...m in den Datenprozessor 140 zu laden.

In einem fünfzehnten Verfahrensschritt M15 wird für mehrere Zyklen Zk, k=1...l die Stabilität ST oder Anomalie AN des Herstellprozesses ermittelt. Bei Anomalie AN des Herstellprozesses ist mindestens ein Fehler E ermittelbar. Vorzugsweise sind mehrere Fehler E vordefiniert. Der Fehler E wird auch mit dem Zyklus-Index k und einem Fehler-Index g als Ekg, k=1...l, g=1...q dargestellt. Der Fehler-Index g bezeichnet die einzelnen Fehler Ekg, k=1...l, g=1...q und die

Fehler-Zahl q bezeichnet die Anzahl der Fehler Ekg, k=1...l, g=1...q. Konkret ist der Fehler Ekg, k=1...l, g=1...q:
- Ein erster Fehler Ekg, k=1...l, g=1 ist eine Abweichung von einem vordefinierten Gewicht des Stückgutes Wk, k=1...l.
- Ein zweiter Fehler Ekg, k=1...l, g=2 ist eine Abweichung von einer vordefinierten Masshaltigkeit des Stückgutes Wk, k=1...l.
- Ein dritter Fehler Ekg, k=1...l, g=3 ist eine Abweichung von einer vordefinierten Grösse des Stückgutes Wk, k=1...l.
- Ein vierter Fehler Ekg, k=1...l, g=4 ist eine Gratbildung am Stückgut Wk, k=1...l.
- Ein fünfter Fehler Ekg, k=1...l, g=5 ist eine Abweichung von einer vordefinierten Füllung der Kavität 110 beim Spritzgiessprozess.
- Ein sechster Fehler Ekg, k=1...l, g=6 ist eine Brandstelle am Stückgut Wk, k=1...l.
- Ein siebter Fehler Ekg, k=1...l, g=7 ist ein verstopfter Kühlkanal der Spritzgiessmaschine 1.

Ein achter Fehler Ekg, k=1...l, g=8 ist ein defektes Heizband der Spritzgiessmaschine 1.
- Ein neunter Fehler Ekg, k=1...l, g=9 ist ein defektes Rückschlagventil der Schnecke 100 der Spritzgiessmaschine 1.

Ein zehnter Fehler Ekg, k=1...l, g=10 ist eine Verstopfung der Düse 101 der Spritzgiessmaschine 1.

Ein elfter Fehler Ekg, k=1...l, g=11 ist eine Schwankung der Viskosität der Schmelze MT der Spritzgiessmaschine 1.

Vorzugsweise führt die Bedienperson der Spritzgiessmaschine 1 den fünfzehnten Verfahrensschritt M15 aus. So kann die Bedienperson visuell ein in einem Zyklus Zk, k=1...l hergestelltes Stückgut Wk, k=1...l überprüfen und ermitteln, ob das Stückgut Wk, k=1...l fehlerfrei ist. Auch kann die Bedienperson die Spritzgiessmaschine 1 überprüfen und ermitteln, ob die Spritzgiessmaschine 1 im Zyklus Zk, k=1... fehlerfrei ist. Dazu weist die Spritgiessmaschine 1 weitere, figürlich nicht dargestellte Sensoreinheiten und Ausgabeeinheiten auf, um einen verstopften Kühlkanal oder ein defektes Heizband oder ein defektes Rückschlagventil der Schnecke 100 oder eine Verstopfung der Düse 101 oder eine Schwankung der Viskosität der Schmelze MT festzustellen. Bei Anomalie AN des Herstellprozesses, ermittelt die Bedienperson den Fehler Ekg, k=1...l, g=1...q. Für den ermittelten Fehler Ekg, k=1...l, g=1...q erzeugt die Bedienperson Fehlerdaten EDkg, k=1...l, g=1...q. Die Bedienperson kann die Fehlerdaten EDkg, k=1...l, g=1...q über die Eingabeeinheit 143 in die Auswerteeinheit 14 eingeben. Die Fehlerdaten EDkg, k=1...l, g=1...q sind digitale Daten.

In einem sechzehnten Verfahrensschritt M16 wird ein Fehlermodell EM bereitgestellt, welches Fehlermodell EM mit den Fehlerdaten EDkg, k=1...l, g=1...q trainiert wird. Dabei ermittelt das Fehlermodell EM für jeden Fehler-Index g der Fehlerdaten EDkg, k=1...l, g=1...q eine Fehlerklasse ECg, g=1...q. Die Bereitstellung des Fehlermodells EM erfolgt in der Auswerteeinheit 14. Zur Ermittlung der Fehlerklasse ECg, g=1...q veranlasst das in den Datenprozessor 140 geladene Computerprogramm CP die Auswerteeinheit 14, das Fehlermodell EM und die Fehlerdaten EDkg, k=1...l, g=1...q in den Datenprozessor 140 zu laden und das Fehlermodell EM mit den Fehlerdaten EDkg, k=1...l, g=1...q zu trainieren.

In einem siebzehnten Verfahrensschritt M17 werden die Sensordaten XDkj, k=1...l, j=1...m des Herstellungsprozesses eines Stückgutes Wk, k=1...l, welches Stückgut Wk, k=1...l einen Fehler Ekg, k=1...l, g=1...q aufweist oder die Sensordaten XDkj, k=1...l, j=1...m des Zyklus Zk, k=1...l der Spritzgiessmaschine 1, in welchem Zyklus Zk, k=1...l die Spritzgiessmaschine 1 einen Fehler Ekg, k=1...l, g=1...q aufweist, in die für den Fehler Ekg, k=1...l, g=1...q ermittelte Fehlerklasse ECg, g=1...q als Fehlersensordaten EXDkjg, k=1...l, j=1...m, g=1...q klassiert. Die Ausführung des siebzehnten Verfahrensschrittes M17 durch die Auswerteeinheit 14 wird durch das in den Datenprozessor 140 geladene Computerprogramm CP veranlasst. Die Fehlersensordaten EXDkjg, k=1...l, j=1...m, g=1...q werden ohne Zyklus-Index k und ohne Sensordaten-Index j und ohne Fehler-Index g auch nur als Fehlersensordaten EXD bezeichnet.

In einem achtzehnten Verfahrensschritt M18 wird für einen weiteren Zyklus Z' mindestens eine zeitliche Folge von weiteren Sensordaten XD'j, j=1...m des Herstellprozesses eines weiteren Stückgutes W' auf der Spritzgiessmaschine 1 bereitgestellt. Die Ausführung des achtzehnten Verfahrensschrittes M18 durch die Auswerteeinheit 14 wird durch das in den Datenprozessor 140 geladene Computerprogramm CP veranlasst.

In einem neunzehnten Verfahrensschritt M19 werden die weiteren Sensordaten XD'j, j=1...m in das Fehlermodell EM eingegeben. Das Fehlermodell EM ermittelt, ob die weiteren Sensordaten XD'j, j=1...m in eine Fehlerklasse ECg, g=1...q klassierbar sind. Und falls die weiteren Sensordaten XD'j, j=1...m in eine Fehlerklasse ECg, g=1...q klassierbar sind, wird eine Fehlerklasseninformation ECI' erzeugt, welche für das weitere Stückgut W' oder für die Spritzgiessmaschine 1 die Fehlerklasse ECg, g=1...q angibt. Die Ausführung des neunzehnten Verfahrensschrittes M19 durch die Auswerteeinheit 14 wird durch das in den Datenprozessor 140 geladene Computerprogramm CP veranlasst.

Vorzugsweise werden die Prozessinformation INF, die Anomalieinformation ANI und die Fehlerklasseninformation ECI' auf der Ausgabeeinheit 142 der Bedienperson der Spritzgiessmaschine 1 ausgegeben.

### Bezugszeichenliste

- 1: Spritzgiessmaschine
- 10: Einspritzvorrichtung
- 11: Spritzgiesswerkzeug
- 12: Steuereinheit
- 13: Sensoreinheit
- 14: Auswerteeinheit
- 100: Schnecke
- 101: Düse
- 110: Kavität
- 140: Datenprozessor
- 141: Datenspeicher
- 142: Ausgabeeinheit
- 143: Eingabeeinheit
- AA: Anomaliebereich
- AN: Anomalie
- ANI: Anomalieinformation
- AMPD: anomale Maschineneinstelldaten
- APPD: anomale Prozessparameterdaten
- CP: Computerprogramm
- D: Vorrichtung
- DD: Dichteverteilung
- E: Fehler
- EC: Fehlerklasse
- ECI: Fehlerklasseinformation
- ED: Fehlerdaten
- EM: Fehlermodell
- EXD: Fehlersensordaten
- g: Fehler-Index
- GP: Gutteil
- h: Prozessparameter-Index
- i: Maschineneinstellgrösse-Index
- I: Einspritzphase
- II: Nachdruckphase
- III: Restkühlphase
- INT: Integral
- INF: Prozessinformation
- j: Sensordaten-Index
- k: Zyklus-Index
- l: Zyklus-Zahl
- m: Sensordaten-Zahl
- M: Verfahren
- M1 bis M19: Verfahrensschritt
- MLM: maschinelles Lernmodell
- MP: Maschineneinstellgrösse
- MPD: Maschineeinstelldaten
- MT: Schmelze
- MV: Mittelwert
- n: Maschineneinstellgrösse-Zahl
- o: Prozessparameter-Zahl
- P: Werkzeuginnendruck
- PI: initialer Werkzeuginnendruck
- PII: Fülldruck
- PIII: Siegelpunktdruck
- PD, PD': Punktdaten
- Pmax: maximaler Werkzeuginnendruck
- PP: Prozessparameter
- PPD: Prozessparameterdaten
- q: Stückgutfehler-Zahl
- R: Wirkungsbeziehung
- RE: Residuum
- RM: Regressionsmodell
- SA: Stabilitätsbereich
- SI: Vorzeichen
- SMPD: stabile Maschineneinstelldaten
- SPPD: stabile Prozessparameterdaten
- ST: Stabilität
- STD: Stabilitätsbestätigungsdaten
- SXD: stabile Sensordaten
- SZ: Grösse
- t: Zeit
- tI: Beginn der Einspritzphase
- tII: Umschaltzeitpunkt
- tIII: Siegelpunkt
- tIV: Ende der Restkühlphase
- TD: Grenzdistanz
- W, W': Stückgut
- XD, XD': Sensordaten
- Y: Werkzeuginnendruckkurve
- Z, Z': Zyklus

## Patentansprüche

1. Verfahren (M) zur Überwachung eines zyklischen Herstellprozesses, mit mehreren Zyklen (Zk, k=1...l), wo in jedem Zyklus (Zk, k=1...l) mindestens ein Stückgut (Wk, k=1...l) hergestellt wird;
wobei in einem ersten Verfahrensschritt (M1) für mindestens einen Zyklus (Zk, k=1...l) mindestens eine zeitliche Folge von Sensordaten (XDkj, k=1...l, j=1...m) des Herstellprozesses automatisch bereitgestellt wird, welche Sensordaten (XDkj, k=1...l, j=1...m) in einer Wirkungsbeziehung (R) mit einer Stabilität (ST) und einer Anomalie (AN) des Herstellprozesses stehen,
**dadurch gekennzeichnet,**
**dass** in einem zweiten Verfahrensschritt (M2) für den Zyklus (Zk, k=1...l) die Stabilität (ST) des Herstellprozesses ermittelt wird, bei Stabilität (ST) des Herstellprozesses werden die Sensordaten (XDkj, k=1...l, j=1...m) als stabile Sensordaten (SXDkj, k=1...l, j=1...m) markiert;
**dass** in einem dritten Verfahrensschritt (M3) die stabilen Sensordaten (SXDkj, k=1...l, j=1...m) automatisch dimensional zu Punktdaten (PDk, k=1...l) reduziert werden; und
**dass** in einem vierten Verfahrensschritt (M4) automatisch eine Dichteverteilung (DD) der Punktdaten (PDk, k=1...l) gebildet wird, welche Dichteverteilung (DD) mindestens einen Stabilitätsbereich (SA) der Punktdaten (PDk, k=1...l) und mindestens einen Anomaliebereich (AA) der Punktdaten (PDk, k=1...l) aufweist, und welche Punktdaten (PDk, k=1...l) im Anomaliebereich (AA) einer Anomalie (AN) des Herstellprozesses entsprechen.

2. Verfahren (M) nach Anspruch 1, **dadurch gekennzeichnet, dass** im zweiten Verfahrensschritt (M2) die Ermittlung der Stabilität (ST) des Herstellprozesses durch Überprüfung der Fehlerfreiheit des im Zyklus (Zk, k=1...l) hergestellten Stückgutes (Wk, k=1...l) erfolgt;
**oder dass** der zyklische Herstellprozess ein Spritzgiessprozess ist und die zeitliche Folge von Sensordaten (XDkj, k=1...l, j=1...m) zu einer Werkzeuginnendruckkurve (Yk, k=1...l) ausgewertet wird und im zweiten Verfahrensschritt (M2) die Ermittlung der Stabilität (ST) des Herstellprozesses durch Überprüfung einer Gestalt der Werkzeuginnendruckkurve (Yk, k=1...l) eines Zyklus (Zk, k=1...l) erfolgt.

3. Verfahren (M) einem der Ansprüche 1 oder 2, **dadurch gekennzeichnet, dass** der im vierten Verfahrensschritt (M4) ermittelte Stabilitätsbereich (SA) einen Mittelwert (MV) der Punktdaten (PDk, k=1...l) und eine Grenzdistanz (TD) zum Mittelwert (MV) aufweist und dass die Punktdaten (PDk, k=1...l) des Anomaliebereiches (AA) ausserhalb der Grenzdistanz (TD) zum Mittelwert (MV) liegen.

4. Verfahren (M) nach einem der Ansprüche 1 bis 3, **dadurch gekennzeichnet,**
**dass** in einem fünften Verfahrensschritt (M5) für einen weiteren Zyklus (Z') automatisch mindestens eine zeitliche Folge von weiteren Sensordaten (XD'j, j=l...m) des Herstellprozesses eines weiteren Stückgutes (W') bereitgestellt wird;
**dass** in einem sechsten Verfahrensschritt (M6) die zeitliche Folge von weiteren Sensordaten (XD'j, j=1...m) des weiteren Stückgutes (W') automatisch dimensional zu weiteren Punktdaten (PD') reduziert wird; und
**dass** in einem siebten Verfahrensschritt (M7) automatisch ermittelt wird, ob die weiteren Punktdaten (PD') im Stabilitätsbereich (SA) liegen oder ob die weiteren Punktdaten (PD') im Anomaliebereich (AA) liegen, und eine Prozessinformation (INF) erzeugt wird, welche angibt, ob beim Herstellprozess des weiteren Stückgutes (W') Stabilität (ST oder Anomalie (AN) vorliegt.

5. Verfahren (M) nach Anspruch 4, **dadurch gekennzeichnet, dass** der zyklische Herstellprozess ein Spritzgiessprozess ist, bei dem mit einer Spritzgiessmaschine (1) in Zyklen (Zk, k=1...l) Stückgüter (Wk, k=1...l) hergestellt werden;
**dass** die Spritzgiessmaschine (1) mindestens eine Einspritzvorrichtung (10) mit einer Schnecke (100) und mindestens ein Spritzgiesswerkzeug (11) mit mindestens einer Kavität (110) aufweist;
**dass** jeder Zyklus (Zk, k=1...l) des Spritzgiessprozesses eine Einspritzphase (I), eine Nachdruckphase (II) und eine Restkühlphase (III) aufweist, welche Einspritzphase (I), Nachdruckphase (II) und Restkühlphase (III) von der Spritzgiessmaschine (1) über mindestens eine der folgenden Maschineneinstellgrössen (MPki, k=1...l, i=1...n) gesteuert wird:
eine erste Maschineneinstellgrösse (MPki, k=1...l, i=1) ist eine Dosiergeschwindigkeit der Schnecke (100) einer Einspritzvorrichtung (10);
eine zweite Maschineneinstellgrösse (MPki, k=1...l, i=2) ist eine Einspritzgeschwindigkeit einer Schmelze (MT) in die Kavität (110) des Spritzgiesswerkzeuges (11);
eine dritte Maschineneinstellgrösse (MPki, k=1...l, i=3) ist ein Umschaltzeitpunkt (tII) von der Einspritzphase (I) auf die Nachdruckphase (II);
eine vierte Maschineneinstellgrösse (MPki, k=1...l, i=4) ist eine Entlastungsbewegung der Schnecke (100) der Einspritzvorrichtung (10);
eine fünfte Maschineneinstellgrösse (MPki, k=1...l, i=5) ist ein Sollwert des Nachdruckes in der Nachdruckphase (II) ;
eine sechste Maschineneinstellgrösse (MPki, k=1...l, i=6) ist eine Temperatur der Schmelze (MT); und
eine siebte Maschineneinstellgrösse (MPki, k=1...l, i=7) ist eine Temperatur des Spritzgiesswerkzeuges (11).

6. Verfahren (M) nach Anspruch 5, **dadurch gekennzeichnet, dass** die Spritzgiessmaschine (1) mindestens eine Auswerteeinheit (14) aufweist, welche Auswerteeinheit (14) mindestens einen Datenprozessor (140) und mindestens einen Datenspeicher (141) aufweist und mindestens ein Computerprogramm (CP) im Datenspeicher (141) gespeichert und in den Datenprozessor (140) ladbar ist, welches in den Datenprozessor (140) geladene Computerprogramm (CP) die Auswerteeinheit (14) veranlasst eine zeitliche Folge von Sensordaten (XDkj, k=1...l, j=1...m) von Zyklen (Zk, k=1...l) in den Datenprozessor (140) zu laden und die geladenen Sensordaten (XDkj, k=1...l, j=1...m) auszuwerten;
**dass** ein erstes Auswertungsergebnis die Ermittlung von mindestens einer Werkzeuginnendruckkurve (Yk, k=l...l) ist und dass ein weiteres Auswertungsergebnis die Ermittlung von mindestens einem der folgenden Prozessparameter (PPkh, k= 1 ... l, h=1...o) ist:
ein erster Prozessparameter (PPkh, k=1...l, h=1) ist ein maximale Werkzeuginnendruck (Pmax);
ein zweiter Prozessparameter (PPkh, k=1...l, h=2) ist das Integral der Werkzeuginnendruckkurve (Yk, k=l...l); und ein dritter Prozessparameter (PPkh, k=1...l, h=3) sind die Punktdaten (PDk, k=1...l).

7. Verfahren (M) nach Anspruch 6, **dadurch gekennzeichnet,**
**dass** in einem achten Verfahrensschritt (M8) in mehreren Zyklen (Zk, k=1...l) mindestens eine Maschineneinstellgrösse (MPki, k=1...l, i=1...n) variiert wird und für jeden Zyklus (Zk, k=1...l) der Maschineneinstellgrössevariation Maschineneinstelldaten (MPDki, k=1...l, i=1...n) der Maschineneinstellgrössevariation bereitgestellt werden, und für jeden Zyklus (Zk, k=1...l) der Maschineneinstellgrössevariation Prozessparameter (PPkh, k=1...l, h=1...o) der Maschineneinstellgrössevariation ermittelt werden, und für die ermittelten Prozessparameter (PPkh, k=1...l, h=1...o) Prozessparameterdaten (PPDkh, k=1...l, h=1...o) automatisch bereitgestellt werden; und
**dass** in einem neunten Verfahrensschritt (M9) ein Regressionsmodell (RM) bereitgestellt wird, in welches Regressionsmodell (RM) die Maschineneinstelldaten (MPDki, k=1...l, i=1...n) und die Prozessparameterdaten (PPDkh, k=1...l, h=1...o) automatisch eingegeben werden, dabei ermittelt das Regressionsmodell (RM) eine Wirkungsbeziehung (Rkih, k=1...l, i=1...n, h=1...0) zwischen den Maschineneinstelldaten (MPDki, k=1...l, i=1...n) und den Prozessparameterdaten (PPDkh, k=l...1, h=1...o).

8. Verfahren (M) nach Anspruch 7, **dadurch gekennzeichnet,**
**dass** in einem zehnten Verfahrensschritt (M10) für mehrere weitere Zyklen (Z'k, k=1...l) Prozessparameter (PPkh, k=1...l, h=1...o) ermittelt werden und für die ermittelten Prozessparameter (PPkh, k=1...l, h=1...o) Prozessparameterdaten (PPDkh, k=1...l, h=1...o) automatisch bereitgestellt werden und für jeden der weiteren Zyklen (Z'k, k=1...l) die Stabilität (ST) des Herstellprozesses ermittelt wird, bei Stabilität (ST) des Herstellprozesses werden die Prozessparameterdaten (PPDkh, k=1...l, h=1...o) automatisch als stabile Prozessparameterdaten (SPPDkh, k=1...l, h=1...o) markiert, bei Anomalie (AN) des Herstellprozesses werden die Prozessparameterdaten (PPDkh, k=1...l, h=1...o) automatisch als anomale Prozessparameterdaten (APPDkh, k=1...l, h=1...o) markiert;
**dass** in einem elften Verfahrensschritt (M11) die stabilen Prozessparameterdaten (SPPDkh, k=1...l, h=1...o) und die anomalen Prozessparameterdaten (APPDkh, k=1...l, h=1...o) in das Regressionsmodell (RM) eingegeben werden und über die Wirkungsbeziehung (Rkih, k=1...l, i=1...n, h=1...o) zu den stabilen Prozessparameterdaten (SPPDkh, k=1...l, h=1...o) korrespondierende stabile Maschineneinstelldaten (SMPDki, k=1...l, i=1...n) und zu den anomalen Prozessparameterdaten (APPDkh, k=1...l, h=1...o) korrespondierende anomale Maschineneinstelldaten (AMPDki, k=1...l, i=1...n) ermittelt werden;
**dass** in einem zwölften Verfahrensschritt (M12) Residuen (REkih, k=1...l, i=1...n, h=1...o) der anomalen Maschineneinstelldaten (AMPDki, k=1...l, i=1...n) zur Wirkungsbeziehung (Rkih, k=1...l, i=1...n, h=1...o) gebildet werden; und
**dass** in einem dreizehnten Verfahrensschritt (M13) die Residuen (REkih, k=1...l, i=1...n, h=1...o) nach Grösse (SZ) und Vorzeichen (SI) geordnet werden und eine Anomalieinformation (ANIk, k=1...l) erzeugt wird, welche angibt, welche Maschineneinstellgrössen (MPki, k=1...l, i=1...n), deren Residuen (REkih, k=1...l, i=1...n, h=1...o) nach Grösse (SZ) und Vorzeichen (SI) am höchsten geordnet sind, die Ursache für eine Anomalie (AN) des Herstellprozesses bilden.

9. Verfahren (M) nach Anspruch 6, **dadurch gekennzeichnet,**
**dass** in einem vierzehnten Verfahrensschritt (M14) in mehreren Zyklen (Zk, k=1...l) in jedem Zyklen (Zk, k=1...l) mindestens ein Stückgut (Wk, k=1...l) hergestellt wird und für jeden Zyklus (Zk, k=1...l) mindestens eine zeitliche Folge von Sensordaten (XDkj, k=1...l, j=1...m) des Herstellprozesses automatisch bereitgestellt wird,
**dass** in einem fünfzehnten Verfahrensschritt (M15) die Stabilität (ST) oder Anomalie (AN) des Herstellprozesses ermittelt wird, bei Anomalie (AN) des Herstellprozesses wird mindestens einer der folgenden Fehler (Ekg, k=1...l, g=1...q) ermittelt:
ein erster Fehler (Ekg, k=1...l, g=1) ist eine Abweichung von einem vordefinierten Gewicht des Stückgutes (Wk, k= 1 ... 1) ;
ein zweiter Fehler (Ekg, k=1...l, g=2) ist eine Abweichung von einer vordefinierten Masshaltigkeit des Stückgutes (Wk, k=1...l) ;
ein dritter Fehler (Ekg, k=1...l, g=3) ist eine Abweichung von einer vordefinierten Grösse des Stückgutes (Wk, k= 1 ... l) ;
ein vierter Fehler (Ekg, k=1...l, g=4) ist eine Gratbildung am Stückgut (Wk, k=1...l);
ein fünfter Fehler (Ekg, k=1...l, g=5) ist eine Abweichung von einer vordefinierten Füllung der Kavität (110) beim Spritzgiessprozess;
ein sechster Fehler (Ekg, k=1...l, g=6) ist eine Brandstelle am Stückgut (Wk, k=1...l);
ein siebter Fehler (Ekg, k=1...l, g=7) ist ein verstopfter Kühlkanal der Spritzgiessmaschine (1);
ein achter Fehler (Ekg, k=1...l, g=8) ist ein defektes Heizband der Spritzgiessmaschine (1);
ein neunter Fehler (Ekg, k=1...l, g=9) ist ein defektes Rückschlagventil der Schnecke (100) der Spritzgiessmaschine (1);
ein zehnter Fehler (Ekg, k=l...l, g=10) ist eine Verstopfung der Düse (101) der Spritzgiessmaschine (1); und
ein elfter Fehler (Ekg, k=1...l, g=11) ist eine Schwankung der Viskosität der Schmelze (MT) der Spritzgiessmaschine (1) ;
für den ermittelten Fehler (Ekg, k=1...l, g=1...q) werden Fehlerdaten (EDkg, k=1...l, g=1...q) bereitgestellt;
**dass** in einem sechzehnten Verfahrensschritt (M16) ein Fehlermodell (EM) bereitgestellt wird, welches Fehlermodell (EM) mit den Fehlerdaten (EDkg, k=1...l, g=1...q) trainiert wird, dabei ermittelt das Fehlermodell (EM) für jeden Fehler-Index (g) der Fehlerdaten (EDkg, k=l...l, g=1...q) eine Fehlerklasse (ECg, g=1...q); und
**dass** in einem siebzehnten Verfahrensschritt (M17) die Sensordaten (XDkj, k=1...l, j=1...m) des Herstellungsprozesses eines Stückgutes (Wk, k=1...l), welches Stückgut (Wk, k=1...l) einen Fehler (Ekg, k=1...l, g=1...q) aufweist, in die für den Fehler (Ekg, k=1...l, g=1...q) ermittelte Fehlerklasse (ECg, g=1...q) als Fehlersensordaten (EXDkjg, k=1...l, j=1...m, g=1...q) klassiert werden.

10. Verfahren (M) nach Anspruch 9, **dadurch gekennzeichnet,**
**dass** in einem achtzehnten Verfahrensschritt (M18) für einen weiteren Zyklus (Z') mindestens eine zeitliche Folge von weiteren Sensordaten (XD'j, j=1...m) des Herstellprozesses eines weiteren Stückgutes (W') bereitgestellt wird; und
**dass** in einem neunzehnten Verfahrensschritt (M19) die weiteren Sensordaten (XD'j, j=1...m) in das Fehlermodell (EM) eingegeben werden, dabei ermittelt das Fehlermodell (EM), ob die weiteren Sensordaten (XD'j, j=1...m) in eine Fehlerklasse (ECg, g=1...q) klassierbar sind, und falls die weiteren Sensordaten (XD'j, j=1...m) in eine Fehlerklasse (ECg, g=1...q) klassierbar sind, eine Fehlerklasseninformation (ECI') erzeugt wird, welche für das weitere Stückgut (W') die Fehlerklasse (ECg, g=1...q) angibt.

11. Vorrichtung (D) zur Ausführung eines Verfahrens (M) zur Überwachung eines zyklischen Herstellprozesses mit mehreren Zyklen (Zk, k=1...l), welche Vorrichtung (D) in jedem Zyklus (Zk, k=1...l) mindestens ein Stückgut (Wk, k=1...l) herstellt;
welche Vorrichtung (D) mindestens eine Sensoreinheit (13) aufweist, welche Sensoreinheit (13) zur Ausführung eines ersten Verfahrensschrittes (M1) für mindestens einen Zyklus (Zk, k=1...l) mindestens eine zeitliche Folge von Sensordaten (XDkj, k=1...l, j=1...m) erzeugt und automatisch bereitstellt, welche Sensordaten (XDkj, k=1...l, j=1...m) in einer Wirkungsbeziehung (R) mit einer Stabilität (ST) und einer Anomalie (AN) des Herstellprozesses stehen;
welche Vorrichtung (D) mindestens eine Auswerteeinheit (14) aufweist, in welcher Auswerteeinheit (14) ein Computerproramm (CP) geladen ist, welches geladene Computerprogramm (CP) die Auswerteeinheit (14) veranlasst, die Sensordaten (XDkj, k=1...l, j=1...m) automatisch zu laden;
**dadurch gekennzeichnet,**
**dass** das geladene Computerprogramm (CP) zur Ausführung des zweiten Verfahrensschrittes (M2) die Auswerteeinheit (14) veranlasst, bei ermittelter Stabilität (ST) des Herstellprozesses die Sensordaten (XDkj, k=1...l, j=1...m) als stabile Sensordaten (SXDkj, k=1...l, j=1...m) zu markieren;
**dass** das geladene Computerprogramm (CP) zur Ausführung eines dritten Verfahrensschrittes (M3) die Auswerteeinheit (14) veranlasst, die stabilen Sensordaten (SXDkj, k=1...l, j=1...m) automatisch dimensional zu Punktdaten (PDk, k=1...l) zu reduzieren; und
**dass** das geladene Computerprogramm (CP) zur Ausführung eines vierten Verfahrensschrittes (M4) die Auswerteeinheit (14) veranlasst, mit den Punktdaten (PDk, k=1...l) automatisch eine Dichteverteilung (DD) zu bilden, welche Dichteverteilung (DD) mindestens einen Stabilitätsbereich (SA) der Punktdaten (PDk, k=1...l) und mindestens einen Anomaliebereich (AA) der Punktdaten (PDk, k=1...l) aufweist, und welche Punktdaten (PDk, k=1..l) im Anomaliebereich (AA) einer Anomalie (AN) des Herstellprozesses entsprechen.

12. Vorrichtung (D) nach Anspruch 11, **dadurch gekennzeichnet,**
**dass die** Sensoreinheit (13) zur Ausführung eines fünften Verfahrensschrittes (M5) für einen weiteren Zyklus (Z') mindestens eine zeitliche Folge von weiteren Sensordaten (XD'j, j=1...m) des Herstellprozesses eines weiteren Stückgutes (W') erzeugt und bereitstellt;
**dass** das geladene Computerprogramm (CP) zur Ausführung eines sechsten Verfahrensschrittes (M6) die Auswerteeinheit (14) veranlasst, die zeitliche Folge von weiteren Sensordaten (XD'j, j=1...m) des weiteren Stückgutes (W') dimensional zu weiteren Punktdaten (PD') zu reduzieren; und
**dass** das geladene Computerprogramm (CP) zur Ausführung eines siebten Verfahrensschrittes (M7) die Auswerteeinheit (14) veranlasst zu ermitteln, ob die weiteren Punktdaten (PD') im Stabilitätsbereich (SA) liegen oder ob die weiteren Punktdaten (PD') im Anomaliebereich (AA) liegen, und die Auswerteeinheit (14) veranlasst, eine Prozessinformation (INF) zu erzeugen, welche angibt, ob beim Herstellprozess des weiteren Stückgutes (W') eine Anomalie (AN) vorliegt.

13. Vorrichtung (D) nach Anspruch 11, **dadurch gekennzeichnet,**
**dass** die Vorrichtung (D) eine Spritzgiessmaschine (1) ist und der zyklische Herstellprozess ein Spritzgiessprozess ist, welche Spritzgiessmaschine (1) in Zyklen (Zk, k=1...l) Stückgüter (Wk, k=1...l) herstellt;
**dass** die Spritzgiessmaschine (1) mindestens eine Einspritzvorrichtung (10) mit einer Schnecke (100) und mindestens ein Spritzgiesswerkzeug (11) mit mindestens einer Kavität (110) aufweist;
**dass** jeder Zyklus (Zk, k=1...l) des Spritzgiessprozesses eine Einspritzphase (I), eine Nachdruckphase (II) und eine Restkühlphase (III) aufweist, welche Spritzgiessmaschine (1) die Einspritzphase (I), die Nachdruckphase (II) und die Restkühlphase (III) über mindestens eine der folgenden Maschineneinstellgrössen (MPki, k=1...l, i=1...n) steuert:
eine erste Maschineneinstellgrösse (MPki, k=1...l, i=1) ist eine Dosiergeschwindigkeit der Schnecke (100) einer Einspritzvorrichtung (10);
eine zweite Maschineneinstellgrösse (MPki, k=1...l, i=2) ist eine Einspritzgeschwindigkeit einer Schmelze (MT) in die Kavität (110) des Spritzgiesswerkzeuges (11);
eine dritte Maschineneinstellgrösse (MPki, k=1...l, i=3) ist ein Umschaltzeitpunkt (tII) von der Einspritzphase (I) auf die Nachdruckphase (II);
eine vierte Maschineneinstellgrösse (MPki, k=1...l, i=4) ist eine Entlastungsbewegung der Schnecke (100) der Einspritzvorrichtung (10);
eine fünfte Maschineneinstellgrösse (MPki, k=1...l, i=5) ist eine Temperatur der Schmelze (MT); und
eine sechste Maschineneinstellgrösse (MPki, k=1...l, i=6) ist eine Temperatur des Spritzgiesswerkzeuges (11);
**dass** die Spritzgiessmaschine (1) zur Ausführung eines achten Verfahrensschrittes (M8) in mehreren Zyklen (Zk, k=1...l) mindestens eine Maschineneinstellgrösse (MPki, k=1...l, i=1...n) variiert und der Auswerteeinheit (14) für jeden Zyklus (Zk, k=1...l) der Maschineneinstellgrössevariation Maschineneinstelldaten (MPDki, k=1...l,
i=1...n) der Maschineneinstellgrössevariation bereitstellt;
**dass** das geladene Computerprogramm (CP) zur Ausführung des achten Verfahrensschrittes (M8) die Auswerteeinheit (14) veranlasst, die Maschineneinstelldaten (MPDki, k=1...l, i=1...n) der Maschineneinstellgrössevariation zu laden;
**dass** das geladene Computerprogramm (CP) zur Ausführung des achten Verfahrensschrittes (M8) die Auswerteeinheit (14) veranlasst, die geladenen Sensordaten (XDkj, k=1...l, j=1...m) auszuwerten und ein erstes Auswertungsergebnis die Ermittlung von mindestens einer Werkzeuginnendruckkurve (Yk, k=1...l) ist und ein weiteres Auswertungsergebnis die Ermittlung von mindestens einem der folgenden Prozessparameter (PPkh, k=1...l, h=1...o) ist:
ein erster Prozessparameter (PPkh, k=1...l, h=1) ist ein maximale Werkzeuginnendruck (Pmax);
ein zweiter Prozessparameter (PPkh, k=1...l, h=2) ist das Integral der Werkzeuginnendruckkurve (Yk, k=l...l); und ein dritter Prozessparameter (PPkh, k=1...l, h=3) sind die Punktdaten (PDk, k=1...l);
**dass** das geladene Computerprogramm (CP) zur Ausführung des achten Verfahrensschrittes (M8) die Auswerteeinheit (14) veranlasst, für jeden Zyklus (Zk, k=1...l) der Maschineneinstellgrössevariation Prozessparameter (PPkh, k=1...l, h=1...o) der Maschineneinstellgrössevariation zu ermitteln, und für die ermittelten Prozessparameter (PPkh, k=1...l, h=1...o) Prozessparameterdaten (PPDkh, k=1...l, h=1...o) bereitzustellen; und
**dass** die Auswerteeinheit (14) ein Regressionsmodell (RM) aufweist und das geladenen Computerprogramm (CP) zur Ausführung eines neunten Verfahrensschritt (M9) die Auswerteeinheit (14) veranlasst, die Maschineneinstelldaten (MPDki, k=1...l, i=1...n) und die Prozessparameterdaten (PPDkh, k=1...l, h=1...o) in das Regressionsmodell (RM) einzugeben und mit dem Regressionsmodell (RM) einen Wirkungsbeziehung (Rkih, k=1...l, i=1...n, h=1...0) zwischen den Maschineneinstelldaten (MPDki, k=1...l, i=1...n) und den Prozessparameterdaten (PPDkh, k=1...l, h=1...o) zu ermitteln.

14. Vorrichtung (D) nach Anspruch 13, **dadurch gekennzeichnet,**
**dass** das geladene Computerprogramm (CP) zur Ausführung eines zehnten Verfahrensschrittes (M10) die Auswerteeinheit (14) veranlasst, für mehrere weitere Zyklen (Z'k, k=1...l) Prozessparameter (PPkh, k=1...l, h=1...o) automatisch zu ermitteln und für die ermittelten Prozessparameter (PPkh, k=1...l, h=1...o) Prozessparameterdaten (PPDkh, k=1...l, h=1...o) automatisch bereitzustellen, und die Auswerteeinheit (14) veranlasst, bei ermittelter Stabilität (ST) des Herstellprozesses die Prozessparameterdaten (PPDkh, k=1...l, h=1...o) automatisch als stabile Prozessparameterdaten (SPPDkh, k=1...l, h=1...o) zu markieren und bei Anomalie (AN) des Herstellprozesses die Prozessparameterdaten (PPDkh, k=1...l, h=1...o) automatisch als anomale Prozessparameterdaten (APPDkh, k=1...l, h=1...o) zu markieren;
**dass** das geladene Computerprogramm (CP) zur Ausführung eines elften Verfahrensschrittes (M11) die Auswerteeinheit (14) veranlasst, die stabilen Prozessparameterdaten (SPPDkh, k=1...l, h=1...o) und die anomalen Prozessparameterdaten (APPDkh, k=1...l, h=1...o) in das Regressionsmodell (RM) einzugeben und über die Wirkungsbeziehung (Rkih, k=1...l, i=1...n, h=1...o) zu den stabilen Prozessparameterdaten (SPPDkh, k=1...l, h=1...o) korrespondierende stabile Maschineneinstelldaten (SMPDki, k=1...l, i=1...n) und zu den anomalen Prozessparameterdaten (APPDkh, k=1...l, h=1...o) korrespondierende anomale Maschineneinstelldaten (AMPDki, k=1...l, i=1...n) zu ermitteln;
**dass** das geladene Computerprogramm (CP) zur Ausführung eines zwölften Verfahrensschrittes (M12) die Auswerteeinheit (14) veranlasst, Residuen (REkih, k=1...l, i=1...n, h=1...o) der anomalen Maschineneinstelldaten (AMPDki, k=1...l, i=1...n) zur Wirkungsbeziehung (Rkih, k=1...l, i=1...n, h=1...o) zu bilden; und
**dass** das geladene Computerprogramm (CP) zur Ausführung eines dreizehnten Verfahrensschrittes (M13) die Auswerteeinheit (14) veranlasst, die Residuen (REkih, k=1...l, i=1...n, h=1...o) nach Grösse (SZ) und Vorzeichen (SI) zu ordnen und eine Anomalieinformation (ANIk, k=1...l) zu erzeugen, welche angibt, welche Maschineneinstellgrössen (MPki, k=1...l, i=1...n), deren Residuen (REkih, k=1...l, i=1...n, h=1...o) nach Grösse (SZ) und Vorzeichen (SI) am höchsten geordnet sind, die Ursache für eine Anomalie (AN) des Herstellprozesses bilden.

15. Vorrichtung (D) nach Anspruch 11, **dadurch gekennzeichnet,**
**dass** die Vorrichtung (D) eine Spritzgiessmaschine (1) ist und der zyklische Herstellprozess ein Spritzgiessprozess ist, welche Spritzgiessmaschine (1) in Zyklen (Zk, k=l...l) Stückgüter (Wk, k=l...l) herstellt;
**dass** die Spritzgiessmaschine (1) zur Ausführung eines vierzehnten Verfahrensschrittes (M14) in mehreren Zyklen (Zk, k=1...l) in jedem Zyklen (Zk, k=1...l) mindestens ein Stückgut (Wk, k=1...l) herstellt und die Sensoreinheit (13) für jeden Zyklus (Zk, k=1...l) mindestens eine zeitliche Folge von Sensordaten (XDkj, k=1...l, j=l...m) des Herstellprozesses erzeugt und bereitstellt,
**dass** bei ermittelter Anomalie (AN) des Herstellprozesses mindestens einer der folgenden Fehler (Ekg, k=1...l, g=l...q) ermittelbar ist:
ein erster Fehler (Ekg, k=1...l, g=1) ist eine Abweichung von einem vordefinierten Gewicht des Stückgutes (Wk, k= 1 ... 1) ;
ein zweiter Fehler (Ekg, k=1...l, g=2) ist eine Abweichung von einer vordefinierten Masshaltigkeit des Stückgutes (Wk, k=1...l);
ein dritter Fehler (Ekg, k=1...l, g=3) ist eine Abweichung von einer vordefinierten Grösse des Stückgutes (Wk, k= 1 ... 1) ;
ein vierter Fehler (Ekg, k=1...l, g=4) ist eine Gratbildung am Stückgut (Wk, k=l...l);
ein fünfter Fehler (Ekg, k=1...l, g=5) ist eine Abweichung von einer vordefinierten Füllung der Kavität (110) beim Spritzgiessprozess; und
ein sechster Fehler (Ekg, k=1...l, g=6) ist eine Brandstelle am Stückgut (Wk, k=1...l);
ein siebter Fehler (Ekg, k=1...l, g=7) ist ein verstopfter Kühlkanal der Spritzgiessmaschine (1);
ein achter Fehler (Ekg, k=1...l, g=8) ist ein defektes Heizband der Spritzgiessmaschine (1);
ein neunter Fehler (Ekg, k=1...l, g=9) ist ein defektes Rückschlagventil der Schnecke (100) der Spritzgiessmaschine (1);
ein zehnter Fehler (Ekg, k=1...l, g=10) ist eine Verstopfung der Düse (101) der Spritzgiessmaschine (1); und
ein elfter Fehler (Ekg, k=1...l, g=11) ist eine Schwankung der Viskosität der Schmelze (MT) der Spritzgiessmaschine (1) ;
für den ermittelten Fehler (Ekg, k=1...l, g=l...q) werden Fehlerdaten (EDkg, k=1...l, g=l...q) bereitgestellt;
**dass** das geladene Computerprogramm (CP) zur Ausführung des vierzehnten Verfahrensschrittes (M14) und zur Ausführung des fünfzehnten Verfahrensschrittes (M15) die Auswerteeinheit (14) veranlasst, die Sensordaten (XDkj, k=1...l, j=l...m) und die Fehlerdaten (EDkg, k=1...l, g=l...q) zu laden;
**dass** die Auswerteeinheit (14) ein Fehlermodell (EM) aufweist und das geladene Computerprogramm (CP) zur Ausführung eines sechzehnten Verfahrensschritt (M16) die Auswerteeinheit (14) veranlasst, das Fehlermodell (EM) mit den Fehlerdaten (EDkg, k=1...l, g=l...q) zu trainieren und mit dem Fehlermodell (EM) für jeden Fehler-Index (g) der Fehlerdaten (EDkg, k=1...l, g=l...q) eine Fehlerklasse (ECg, g=l...q) zu ermitteln; und
**dass** das geladene Computerprogramm (CP) zur Ausführung eines siebzehnten Verfahrensschrittes (M17) die Auswerteeinheit (14) veranlasst, die Sensordaten (XDkj, k=1...l, j=l...m) des Herstellprozesses eines Stückgutes (Wk, k=1...l), welches Stückgut (Wk, k=1...l) einen Fehler (Ekg, k=1...l, g=l...q) aufweist oder die Sensordaten (XDkj, k=1...l, j=l...m) des Zyklus (Zk, k=1...l) der Spritzgiessmaschine (1), in welchem Zyklus (Zk, k=1...l) die Spritzgiessmaschine (1) einen Fehler (Ekg, k=1...l, g=l...q) aufweist, in die für den Fehler (Ekg, k=1...l, g=1...q) ermittelte Fehlerklasse (ECg, g=1...q) als Fehlersensordaten (EXDkjg, k=1...l, j =1...m, g=1...q) zu klassieren.

16. Vorrichtung (D) nach Anspruch 15, **dadurch gekennzeichnet,**
**dass** die Sensoreinheit (13) zur Ausführung eines achtzehnten Verfahrensschrittes (M18) für einen weiteren Zyklus (Z') mindestens eine zeitliche Folge von weiteren Sensordaten (XD'j, j=l...m) des Herstellprozesses eines weiteren Stückgutes (W') erzeugt und bereitstellt; und
**dass** das geladene Computerprogramm (CP) zur Ausführung eines neunzehnten Verfahrensschrittes (M19) die Auswerteeinheit (14) veranlasst, die weiteren Sensordaten (XD'j, j=l...m) in das Fehlermodell (EM) einzugeben und mit dem Fehlermodell (EM) zu ermitteln, ob die weiteren Sensordaten (XD'j, j=l...m) in eine Fehlerklasse (ECg, g=l...q) klassierbar sind, und falls die weiteren Sensordaten (XD'j, j=1...m) in eine Fehlerklasse (ECg, g=1...q) klassierbar sind, und die Auswerteeinheit (14) veranlasst, eine Fehlerklasseninformation (ECI') zu erzeugen, welche für das weitere Stückgut (W') die Fehlerklasse (ECg, g=1...q) angibt.
